# EUROPÄISCHE PATENTSCHRIFT

(11) **EP 1 483 735 B1**
(45) Veröffentlichungstag und Bekanntmachung des Hinweises auf die Patenterteilung: **17.12.2008**
(21) Anmeldenummer: 03712006.0
(22) Anmeldetag: 13.03.2003
(51) Int. Cl.: G06K 19/10, G06K 19/08

(54) **ERZEUGEN UND VERFOLGEN GEDRUCKTER DOKUMENTE MIT EINER EINDEUTIGEN KENNUNG**
PRODUCING AND TRACING PRINTED DOCUMENTS WITH A DETERMINATE IDENTIFIER
PRODUCTION ET SUIVI DE DOCUMENTS IMPRIMES COMPORTANT UNE IDENTIFICATION UNIVOQUE

(30) Priorität: 13.03.2002 DE 10211080
(43) Veröffentlichungstag der Anmeldung: 08.12.2004
(73) Patentinhaber: Océ Printing Systems GmbH, 85586 Poing (DE)
(72) Erfinder: FRÖHLICH, Georg, 85521 Ottobrunn (DE); DIESLER, Wilfried, 82131 Gauting (DE); UBERT, Ralf, 85435 Erding (DE); AHAMMER, Robert, 85232 Gündig (DE)
(74) Vertreter: Schaumburg, Thoenes, Thurn, Landskron
(86) Internationale Anmeldenummer: PCT/EP2003/002642
(87) Internationale Veröffentlichungsnummer: WO 2003/077196

(56) Entgegenhaltungen:
- EP-A- 0 595 549
- WO-A-01/91045
- WO-A-02/19182
- DE-A- 19 720 747
- DE-A- 19 900 086
- DE-C1- 19 853 226
- JP-A- 2000 285 203
- US-A- 5 831 531
- US-A- 6 027 027
- US-A- 6 137 967
- US-A1- 2002 170 973
- FINKENZELLER KLAUS: "RFID-Handbuch" 31. Dezember 1998 (1998-12-31), CARL HANSER VERLAG , MUNICH VIENNA , XP002987474

## Beschreibung

Die Erfindung betrifft ein Verfahren, ein Gerätesystem und Computerprogramme zum Erzeugen und Verfolgen gedruckter Dokumente mit einer eindeutigen Kennung. Derartige Dokumente werden in einer Vielzahl von Anwendungen benötigt und dienen häufig dazu, im Rahmen einer Ablauforganisation eine inhaltliche und/oder zeitliche Zuordnung zu treffen. Beispielsweise werden fälschungssichere Dokumente als Ausweispapiere (Personalausweis, Reisepass, Führerschein, Reise-Tickets, Eintrittskarten usw.) für Personen benötigt. Auch im Warenverkehr werden eindeutig zu identifizierende Dokumente bzw. Urkunden benötigt, beispielsweise bei der Abwicklung von Zoll-Formalitäten oder auch bei der Verfolgung von versandten Waren auf ihrem Weg zum Empfänger.

In der Publikation "Das Druckerbuch", Dr. Gerd Goldmann (Hrsg), Océ Printing Systems GmbH, Ausgabe 4a, Poing (Mai 1999), ISBN 3-00-001019-X ist im Kapitel 14 unter dem Titel "Océ Domain" ein Produktionsüberwachungs- und kontrollsystem beschrieben, in dem ein Dokumentenproduktionsprozess geplant, überwacht und gesteuert wird. Das System kontrolliert die Produktion von Dokumenten und überwacht dabei, ob die Dokumente korrekt gedruckt und das Druckgut im Zuge der Weiterverarbeitung - beispielsweise in einem Schneidegerät, einem Kuvertiergerät, und/oder einem Gerät für den Postversand, korrekt verarbeitet wird. Bei Störungen veranlaßt das System automatisch den Nachdruck eines Ersatzdokuments und das Aussondern des fehlverarbeiteten Dokuments, so daß eine durchgängige Prozeßkontrolle vom Erzeugen des Dokuments in einem elektronischen System, z.B. einem Anwenderprogramm in einem Computer, bis zum Abschluß des Produktionsprozesses, beispielsweise durch die Bereitstellung des Dokuments zum Postversand, sichergestellt ist.

Zur Steuerung und Überwachung des Dokumentenproduktionsvorganges sind in dem oben genannten System mehrere Computer steuernde Komponenten, sog. Manager, vorgesehen, die verschiedene Überwachungs- bzw. Steuerungsaufgaben in dem Dokumentenproduktionsvorgang durchführen. In einem sog. Systems Manager werden Betriebsdaten des gesammten Druck- bzw. Vor-und Nachverarbeitungsprozesses erfaßt. Dabei werden alle bei der Abarbeitung des Dokumentenproduktionsauftrags anfallenden Informationen, z.B. die Anzahl, Größe und Parameter der zu bearbeitenden Aufträge (Jobs), deren Fertigstellungsgrad und Dauer festgehalten sowie die Geräte erfaßt, mit denen die Aufträge bearbeitet wurden.

Mit dem sog. Device Manager werden Maschinendaten des Dokumentenproduktionssystems erfaßt. Dabei werden statische Maschinendaten wie z.B. die Gerätebezeichnung, dessen Seriennummer, Version einer Steuerungssoftware etc. einmalig in eine Datenbank aufgenommen. Dynamische Maschinendaten, die kontinuierlich während des Betriebs des Geräts erfaßt werden, z.B. aktuelle Geräteeinstellungen, Fehlermeldungen und Leistungsdaten (Zählerstände, Taktraten usw) werden dabei laufend mit einem entsprechenden Zeitstempel versehen und ebenfalls in der Datenbank erfaßt. Anhand dieser Daten können dann Auswertungen für Einzelgeräte oder Gerätegruppen erfolgen und beispielsweise Auslastungsberichte, Fehlerberichte oder Leistungsberichte erzeugt werden. Derartige Daten oder Berichte können dann über eine anwenderprogrammspezifische Schnittstelle (Application Programme Interface, API) in andere, zur Auswertung geeignete Systeme exportiert werden.

Aus der sechsten Ausgabe der Veröffentlichung "Das Druckerbuch" der Océ Printing Systems GmbH vom Mai 2001 ist im Kapitel 15 ein weiterentwickeltes Dokumentenproduktionsüberwachungs- und kontrollsystem beschrieben. Aus der WO 02/19182 ist ein entsprechendes Verfahren, ein Gerät bzw. Computer-programmprodukt zum Überwachen eines Dokumentenproduktionsprozesses bekannt.

Aus der US-A-6,137,967 sind ebenfalls Verfahren und Systeme bekannt, mit denen Dokumente gedruckt, das Druckerzeugnis erfasst und der gesamte Dokumentenproduktionsablauf über ein Computersystem überwacht und gesteuert wird.

Aus der WO- 00/19278 A1 ist ein Druck- oder Kopiersystem bekannt, bei dem ein Tonervorratsbehälter mit einem berüh-rungslos elektronisch les- bzw. beschreibbaren Datenträger, einem sog. Transponder, versehen ist. Mit dem Transponder können dynamisch Daten über den jeweils im Behälter befindli-chen Toner erfasst werden und/oder diese Daten einer Steuerung zur Verfügung gestellt werden um entsprechende Geräteparameter einzustellen.

Aus der DE-A1-100 27 574 ist es bekannt, ein flächiges Bahn-oder Bogenmaterial zum Beschreiben, Bedrucken oder dergleichen zur Verfügung zu stellen, wobei an der Bahn oder am Bogen flächig verteilt magnetisierbare Partikel vorgesehen sind. Auf diesen Partikeln können dann magnetisch Informationen hinterlegt werden, die zur Steuerung von Produktionsabläufen oder dergleichen verwendbar sind.

In einer Veröffentlichung der Flexchip AG mit dem Titel Transpondertechnik, datiert auf 11.09.2000 und verfügbar unter www.flexchip.de/deutsch/news/frames/transponder.html ist beschrieben, wo Transponder eingesetzt werden können und wie Transponder-Systeme funktionieren. Dabei ist ausgeführt, dass sich entsprechende Chips in Papier einbinden lassen und dass solche elektronischen Etiketten, sog. Smart Labels, als Warenlieferscheine, als Fahrscheine für Verkehrsbetriebe, als Bibliotheksausweise und als Eintrittskarten verwendbar sind.

Aus der DE-A1-197 20 747 ist es bekannt, Transpondersysteme in Dokumenten als Sicherheitselemente zu gestalten, die einen Sollbruchbereich aufweisen, bei dessen Bruch die elektrische Verbindung zwischen Schaltkreis und Spule dauerhaft unterbrochen ist.

Aus der EP 595 549, gegen die die Ansprüche abgegrentzt wurden, und der US-A-6,027,027 sind Fluggepäck-anhänger bekannt, bei denen die Gepäckanhänger jeweils einen Transponder umfassen. Aus der DE-A1-199 00 086 und der DE-C1-198 53 226 sind Laminatbahnrollen für derartige Fluggepäckanhänger bekannt.

Aus der US-A-5,831,531 ist es bekannt, für Gepäcksiegel Streifen mit einer Transponderanordnung zu verwenden, die bei unautorisiertem Öffnen eine Alarmfunktion auslösen.

Aus der JP-A-2000-285203 und aus der US-A-2002/0170973 ist es bekannt, einen integrierten Schaltkreis als IC Chip in Papier zu integrieren.

Aus der WO-A-01/91045 ist es bekannt, in einem Schriftstück einen berührungslos lesbaren Datenträger zu integrieren, z.B. einen Halbleiterchip.

In dem "RFID-Handbuch, Klaus Finkenzeller, Carl Hanser Verlag, München, 1998" ISBN 3-446-19376-6 (XP 298 7474) sind verschiedene Transpondertypen beschrieben, darunter sogenannte Read-Only Transponder, in denen jeweils eine unveränderbare Seriennummer gespeichert ist.

Es ist Aufgabe der Erfindung, ein Verfahren und Systeme anzugeben, mit denen gedruckte Dokumente während des Druckprozesses und/oder dem Druckprozess nachgeschalteten Verarbeitungsvorgängen und Anwendungen eindeutig und sicher identifizierbar sind und deren Bearbeitung und Nutzung dokumentspezifisch steuerbar und veränderbar sind.

Diese Aufgabe wird durch die in den unabhängigen Patentansprüchen angegebene Erfindung gelöst. Vorteilhafte Ausführungsformen der Erfindung sind in den Unteransprüchen angegeben.

Gemäß der Erfindung wurde erkannt, dass es mittels eines Datenträgers, der berührungslos elektronisch lesbar und/oder beschreibbar ist, möglich ist, die gedruckten Dokumente bereits vom Druckvorgang an über die gesamte weiterverarbeitungs- bzw. Nutzungskette eindeutig zu erkennen bzw. zuzuordnen. Vorzugsweise kann die Möglichkeit geschaffen werden, auf das Dokument zusätzliche Daten und/oder geänderte Daten bedarfsgerecht elektronisch zu speichern. Mit der Erfindung werden sozusagen intelligente Dokumente geschaffen, die nicht nur zur optischen Wiedergabe von Informationen dienen, sondern mit denen interaktiv Informationen ausgetauscht, d.h. gespeichert und/oder gelesen werden, so dass eine interaktive Informationsauswertung auch während der Nutzung der Dokumente in den unterschiedlichsten Anwendungsprozessen möglich ist, wobei vorgegebene, auf dem Datenträger veränderbar aufgebrachte Informationen geändert werden können.

Für die Erfindung eröffnet sich ein breites Anwendungsfeld. Beispielsweise können Daten der Waren-Logistik einerseits in Computern vorgehalten werden und andererseits auf ein erfindungsgemäßes intelligentes Dokument aufgebracht werden. Die Daten können dabei auf dem Dokument gleichzeitig in mehreren Formen abgespeichert sein, beispielsweise auf einem elektronischen Halbleiterspeicher, der über elektromagnetische Strahlung wie z.B. Radiofrequenz bzw. RFID-Technik beschreibbar und lesbar ist (Transponder), als optisch in Klarschrift gedruckte Daten, als mit magnetischem Material bedruckte Daten (sog. MICR-Druck, magnetic ink character recognition) als eindimensionaler oder zweidimensionaler Barcode, auf magnetischen Bereichen, die fest mit dem Dokument verbunden sind, als fotografisch gespeicherte Information oder mit anderen, geeigneten Speichermaßnahmen. Transponder sind in vielfältiger weise käuflich erhältlich und die Erfindung ist nicht auf einen bestimmten Transpondertyp beschränkt.

Mit der Erfindung können auch gedruckte Dokumente für z.B. Sportwettbewerbe erstellt werden, bei denen ein Wettbewerber, z.B. ein Sportler, einerseits in elektronischen Listen des Veranstalters geführt wird und andererseits selbst einen Ausdruck über seine Teilnahmedaten (Alter, Adresse, Startnummer etc.) bekommt. Ein solcher Ausdruck kann erfindungsgemäß als Dokument aufgewertet werden, wenn er einen elektronisch berührungslos lesbaren, insbesondere sogar auch beschreibbaren, Datenträger aufweist. Ein solcher Datenträger kann dann vom Sportler auf seinem Wettkampf mitgeführt werden und seine Anwesenheit an bestimten Kontrollpunkten berührungslos von einem Kontrollpunktsensor erfasst werden. Mit der erfindungsgemäßen Überwachungsmöglichkeit im Dokumentenproduktionsprozess und mit der Bildung einer verknüpften Datei kann eine hohe Datenintegrität erreicht werden, d.h. sichergestellt werden, dass die Produktion für alle Veranstaltungsteilnehmer vollständig und korrekt erfolgt, d.h. dass jeder Teilnehmer genau ein Dokument erhält, mit dem er eindeutig im Wettkampf identifiziert werden kann.

Mit der Erfindung können auch Eintrittskarten nummerngenau gesichert für den Nutzer bzw. Käufer erstellt werden, wobei die Möglichkeit besteht, Eintrittskarten personifiziert, aber zunächst ohne Gültigkeit zu erstellen und sie erst in einem späteren Legitimationsschritt gültig zu machen, indem die dem Eintxittskarten-Dokument zugeordnete Datei derart geändert wird, dass sie von "ungültig" auf "gültig" gesetzt wird oder umgekehrt, wenn ein solches Dokument verloren oder entwendet wurde und der Nutzer sich nicht als Eigentümer ausweisen kann.

Gegenüber herkömmlichen gedruckten Dokumenten hat die Erfindung den Vorteil, dass die Daten des dabei erzeugten Dokuments nachträglich ohne weiteres verändert, z. B. korrigiert oder ergänzt werden können, beispielsweise an verschiedenen Stationen, an denen das Dokument verwendet wird. Die Möglichkeit, Daten berührungslos elektronisch vom Dokumenten-Datenträger auszulesen oder auf diesem zu schreiben ist insbesondere dort vorteilhaft, wo Waren schwierig zugänglich sind und somit eine berührungslose Erfassung und Veränderung der Dokumenten-Daten beispielsweise per Funkverbindung die Arbeit wesentlich erleichtert.

Die Verknüpfung des individuellen Erkennungsmerkmals des Datenträgers mit gedruckten oder anderweitig zugeordneten Daten des Dokuments in einer Datei, die vom Dokument separiert ist, ermöglicht durch einen späteren Vergleich dieser Daten einen hohen Grad an Datenintegritätsprüfung bzw. an Fälschungsprüfung. Ein individuelles Erkennungsmerkmal können zusätzlich auch biometrische Daten sein, die auf dem Transponder oder zu der transpondergeführten Datenbank gespeichert werden. Die mit Sensoren erfassten biometrischen Daten des Eigentümers können stets zeitnah zu einer Autorisierung mit den gespeicherten Daten verglichen werden.

Mit der Erfindung ist insbesondere auch eine geschlossene Verarbeitung von Dokumenten zu ermöglichen. Beispielsweise können Bücher von der Produktion bis zu ihrem Standort in einer Bücherei bzw, einschließlich der Entleihvorgänge von Büchereien erfasst werden. Den Dokumenten bzw. Büchern kann damit für ihre gesamte Lebensdauer eine eindeutige Erkennungsmerkmal zugeordnet werden, das sich aus der Kombination des individuellen Datenträgermerkmals und ausgewählter, auf das Dokument bezogener Daten zusammensetzt. Anhand dieser Merkmale können sie an den verschiedenen Stationen ihrer Ver- bzw. Bearbeitung erkannt werden und entsprechende Daten in ein Überwachungssystem übernommen werden. Ein solches Überwachungssystem erlaubt damit, die Position und den Status des Dokuments über ein elektronische Netzwerk praktisch weltweit verfügbar zu machen und ermöglicht die Zuordnung dieser Daten zur Person, die autorisiert ist, die Dokumente und die Waren zu einem vorgesehenen Termin weiterzugeben opder diese einer nächsten Person zu übergeben, deren ID-Daten entsprechend dem Prozessablauf ebenso gespeichert und gesichert sind. Weiter ermöglicht die Zuordnung dieser Daten zu einer Person, die autorisiert ist, die Dokumente und die Waren zu einem vorgesehenen Termin weiterzugeben oder diese einer nächsten person zu übergeben, deren ID-Daten entsprechend dem Prozessablauf ebenso gespeichert und gesichert sind. Über die Verknüpfung der Dokumentendaten mit einer nicht löschbaren Eigenschaft des Datenträgers, beispielsweise mit der in einem read-onlymemory (ROM)-Bereich gespeicherten Kennnummer eines Halbleiterspeichers ist damit erreichbar, dass die Dokumente gegen Manipulation sehr gut geschützt sind. Mit dieser Kennnummer können Tracking- und Tracingprozesse im Vergleich zum geplanten Prozessablauf angestossen werden.

Gemäß einem bevorzugten Ausführungsbeispiel der Erfindung wird die im Zuge des Dokumenten-Produktionsvorganges erstellte Datei in einem dem Dokumenten-Produktionsvorgang nachgeschalteten Dokumenten-Bearbeitungs-vorgang zur Überprüfung der Echtheit des Dokumentes derart verwendet, daß ihr Inhalt mit gelesenen Daten von dem Dokument verglichen wird. Dabei wird insbesondere die in den Datenträger unlöschbar elektronisch gespeicherte Kennnummer gelesen und die Originalität des Dokumentes anhand dieser Kennnummer in Verbindung mit der Produktion des Dokuments die in der Datei abgelegten Daten, wie z. B. die Kennnummer des Datenträgers, Daten des Anwenderprogramms und/oder der Druckdaten festgestellt. Der Vergleich mit einer ID eines Überbringers dieser Daten auf den Produkten oder den Dokumenten sichert den gesamtheitlichen logistischen Prozess ab.

Weiterhin ist es vorteilhaft, auf dem Aufzeichnungsträger zusätzliche Erkennungsmerkmale, wie z. B. eine in Klarschrift gedruckte Kennnummer, einen ein- oder zweidimensionalen optisch lesbaren Barcode und/oder eine Information in einer magnetisierbaren Schicht aufzubringen. Die in Klarschrift gedruckte Kennnummer kann dabei insbesondere identisch zu der im Transponder gespeicherten Kennnummer sein und/oder zu einer im optischen Barcode gespeicherten Nummer und/oder zu einer in der magnetischen Schicht (auf oder im Papier integriert) gespeicherten Kennnummer.

Zur Erstellung personalisierter, fälschungssicherer Dokumente kann es auch vorgesehen sein, eindeutige Kennzeichen einer Person, insbesondere einen Fingerabdruck, Daten eines genetischen Fingerabdrucks und/oder Angaben über die Iris der Person auf dem Dokument zu hinterlegen und im Zuge des Dokumenten-Produktionsprozesses diese Daten ebenfalls in der Datei abzulegen. Die Daten auf dem Datenträger können insbesondere verschlüsselt abgespeichert werden, wodurch eine noch größere Fälschungssicherheit erreicht wird.

Gemäß einem weiteren, vorteilhaften Ausführungsbeispiel der Erfindung wird ein Produktionsvorgang für ein gedrucktes Dokument, das auf einem Aufzeichnungsträger erzeugt wird, auf dem ein elektronisch beschreibbarer Datenträger mit einem individuellen Erkennungsmerkmal angebracht ist, derart gesichert, daß die Kennung des Datenträgers, das Druckergebnis und/oder das elektronische Schreibergebnis überprüft werden und im Falle eines Fehldrucks, einer fehlerhaften Kennung und/oder eines fehlerhaften Schreibergebnisses automatisch das fehlerhafte Dokument einschließlich der Zuordnung des individuellen Erkennungsmerkmals ausgesondert wird und die nochmalige Erzeugung des gedruckten Dokuments veranlaßt wird.

Die Erfindung kann auch in einem industriellen Bereich angewandt werden, in dem Produktinformationen und Herstellerangaben beispielsweise im Rahmen von Produkthaftungsgesetzten jederzeit abrufbar zur Verfügung stehen müssen, z.B. im Pharmabereich bei der Entwicklung bzw. Produktion von Medikamenten.

Die Erfindung ist mit allen Digitaldruckern, von Karten/Etikettendruckern bis hin zu Hochleistungsdruckgeräten ausführbar. Dabei ist es vorteilhaft, wenn die Druckgeräte eine Datenverarbeitungs-Anbindung aufweisen, die die Nutzerdaten mit den Jobdaten zum Druck ermöglichen und an denen eine entsprechende Erkennungssensorik angekoppelt werden kann und die auch vernetzbar sind. Der Druckvorgang erfolgt dabei insbesondere mit einem oder mehreren elektrografischen-Hochleistungsdruckgeräten und das Beschreiben, Ändern und/oder Auslesen von Daten des Datenträgers erfolgt vorzugsweise, nachdem der Aufzeichnungsträger das Hochleistungsgerät verlassen hat. Die an dem Kontrollpunkt erfaßten Daten können insbesondere in der im Zuge des Druckvorgangs erzeugten Datei abgespeichert werden, so daß erkennbar ist, daß das Dokument an dem Kontrollpunkt war.

Weitere Aspekte und Vorteile der Erfindung werden anhand der nachfolgenden Beschreibung von Ausführungsbeispielen mit Figuren deutlich.

Es zeigen:
Figur 1: Ein Dokumentenproduktionssystem,
Figur 2: Einen Daten- und Materialfluß eines Dokumentenproduktionssystems,
Figur 3: Komponenten und Datenflüsse eines Druckproduktionssystems,
Figur 4: Ein Datenflußdiagramm für eine Druckproduktions-Steuerung,
Figur 5: Ein gedrucktes Dokument,
Figur 6: Zwei Verarbeitungswege mit Kontrollpunkten für zwei Dokumente,
Figur 7: Ein zweites Dokumentenproduktionsssystem,
Figur 8: Ein Besucherverwaltungssystem für Veranstaltungen,
Figur 9: Datentechnische Details des Systems gemäß Figur 8 und
Figur 10: Ein Warenlogistiksystem.

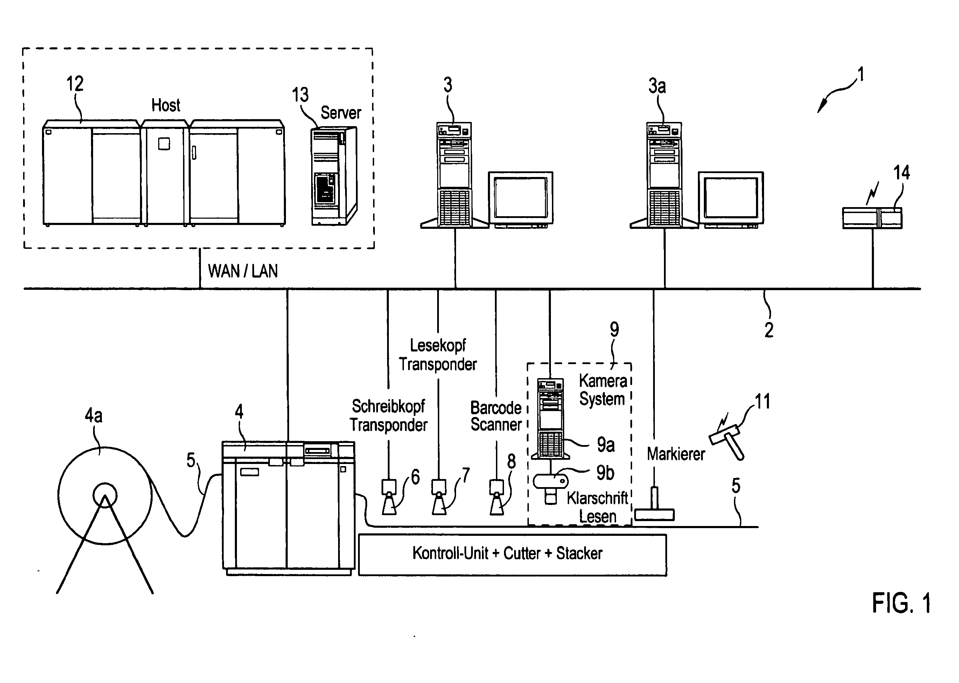

In Figur 1 ist ein Dokumenten-Produktionssystem 1 dargestellt, in dem diverse Computer, ein Drucker sowie Geräte zur Behandlung gedruckter Dokumente nach dem Druckvorgang über ein Netzwerk 2 miteinander verbunden sind. Das Netzwerk 2 kann dabei ein über verschiedene Standorte verteiltes Netzwerk sein (Wide Area Network, WAN) oder als an einem Standort aufgebautes Netzwerk (Local Area Network, LAN) ausgebildet sein. In einem Host-Computer 12, einem Druckserver 13 oder einem Client-Computer können elektronische Dokumente erzeugt oder bearbeitet werden, die beispielsweise Texte, Grafiken, Bilder, Filme, Töne und/oder Kombinationen hiervon enthalten.

Die zu druckenden Dokumentendaten werden vom Client-Computer 3 wahlweise direkt an den Drucker 4 oder an den Host-Computer (Host) 12 oder an den Druckserver 13 gesandt, in denen sie zum Drucken weiter aufbereitet werden. Dort werden ggf. die Druckdaten begleitende Steuerungsdaten empfangen und derart aufbereitet, daß sie mit hoher Geschwindigkeit in dem Druckgerät 4 ausgedruckt werden können. Etwaige Steuerungsinformationen können weiterhin den Druckprozeß und/oder dem Druckprozeß nachfolgende Dokumenten-Verarbeitungsschritte steuern. Dazu können z. B. Schneideeinrichtungen, Stapeleinrichtungen, Kuvertierer usw. eingesetzt werden. Die vom Abroller 4a in das Druckgerät 4 eingezogene und bedruckte Papierbahn 5 wird nach dem verlassen des Druckgeräts 4 elektronisch mit zusätzlichen Daten beschrieben. Dieser Schreibvorgang wird mittels elektromagnetischer Strahlung, insbesondere mit Hochfrequenz-Strahlung, durch einen Transponder-Schreibkopf 6 auf einen auf der Papierbahn 5 aufgebrachten, berührungslos lesbaren, beschreibbaren, löschbaren und veränderbaren Transponder durchgeführt. Unmittelbar danach wird mit dem Transponder-Lesekopf 7 die vorher geschriebenen Informationen sowie eine im Transponder des Dokuments unlöschbar gespeicherte, individuelle Kennnummer gelesen. Dann wird geprüft, ob die Kennnummer und die vorher geschriebenen Informationen lesbar sind, wodurch erkennbar ist, ob der Transponder funktionsfähig ist. Falls der Transponder nicht mehr funktionsfähig ist, beispielsweise weil er im Zuge der vorgelagerten Verfahrensprozesse (z. B. Herstellung, Versand, Lagerung, Aufbringen auf das Papier, Drucken oder Fixieren im Druckgerät) beschädigt wurde, so wird das gedruckte Dokument direkt dem Markierer 10 zugeführt und dort optisch erkennbar als fehlerhaft gekennzeichnet und gleichzeitig beim Steuerungscomputer 3a das erneute Drucken des Dokuments veranlaßt (sogenannter Re-Print). Das fehlerhafte Dokument wird des weiteren ausgesondert und vernichtet.

Wenn die Papierbahn 5 den Transponderlesekopf 7 erfolgreich passiert hat, wird mit einem Barcode-Scanner 8 mindestens ein auf dem Dokument angeordneter Barcode erfaßt, wobei der Barcode eindimensional oder auch zweidimensional aufgebaut sein kann. Im nächsten Verfahrensschritt wird mit einem Kamerasystem 9, das einen separaten Kamera-Computer 9a und eine Kamera 9b enthält, die in Klarschrift gedruckte Information gelesen und eine Bewertung durchgeführt, ob die Druckqualität ausreichend ist und/oder ob auf dem Dokument in Klarschrift eine Dokumentennummer aufgedruckt ist. Wenn ein Dokument fehlerhaft ist, wird im Steuerungscomputer 3a ebenfalls vermerkt, daß dieses Dokument fehlerhaft ist und deshalb hinsichtlich weiterer Verarbeitungsschritte zu entwerten ist.

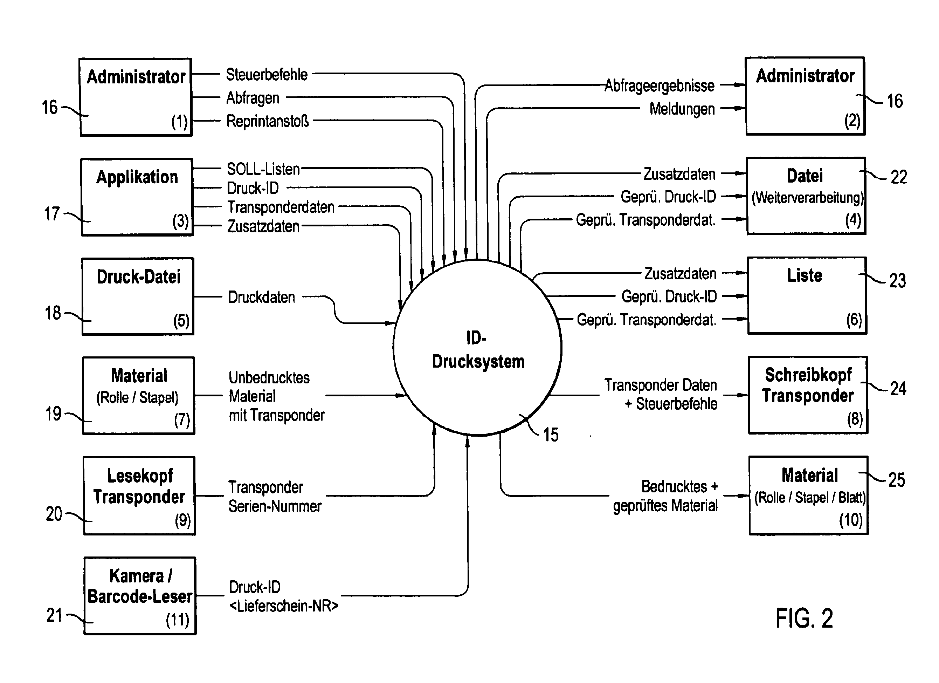

Zusätzlich werden im Steuerungscomputer 3a diverse Steuerungs-Daten des Dokuments erfaßt und gemeinsam in einer Datei gespeichert (siehe Figur 2). Die in der Datei gespeicherten Daten sind dann von jedem Zugangspunkt 14 aus erreichbar, der eine Netzwerkverbindung zum Steuerungscomputer 3a hat. Alternativ dazu kann die Datei auch an einen anderen Computer, der online oder offline ist, übertragen werden, wahlweise über eine Netzwerkübertragung oder auch über einen separaten Datenträger, wie z. B. Diskette oder CD-ROM.

Mit einem mobilen Transponderleser 11 können die im Transponder des Dokuments gespeicherten Daten jederzeit verfügbar gemacht werden. Über den Zugangspunkt 14 können diese Daten mit den im Steuerungscomputer 3a oder einem anderen Computer abgelegten spezifischen Daten des Dokuments abgeglichen werden und somit die Originalität des Dokuments geprüft werden.

Figur 2 zeigt logische und physikalische Zusammenhänge in einem Drucksystem, wie es in Figur 1 beschrieben wurde. Kern ist dabei das ID-Drucksystem 15, in dem z.B. der Drucker 4, einer der drei Anwendungscomputer 3, 12, 13, der Steuerungscomputer 3a sowie die Lese- und Schreibeinrichtungen 6, 7, 8, 9 und 10 dazugehören. In Figur 2 sind auf der linken Hälfte Vorgänge dargestellt, die in das ID-Drucksystem 15 Daten und/oder Material einbringen und auf der rechten Seite Vorgänge, bei denen Daten und/oder Material vom ID-Drucksystem 15 abgegeben werden.

Eingabeseitig werden von einem Bediener des Gesamtsystems über eine Administrator-Konsole 16 Steuerbefehle, Abfragen und Anforderungen für einen Neudruck in das ID-Drucksystem eingebracht. Von einer oder mehreren Anwendungen 17, die in einem oder mehreren der Computer 3, 12, 13 ablaufen, werden Steuerungsdaten in das ID-Drucksystem eingespielt, insbesondere sog. Soll-Listen, in denen Informationen über zu druckende Dokumente eingespielt werden, durch die fehlerhafte oder insbesondere fehlende Drucke festgestellt werden. Desweiteren können Daten der in den verschiedenen Dokumenten verwendeten Transponder, z.B. die Transponder-Seriennummer, übertragen werden. Weiterhin können von der Anwendung 17 zusätzliche Daten, z.B. für Steuerungszwecke und/oder für die Verschlüsselung von Dokumenten/Dokument-Zertifikaten das ID-Drucksystem 15 übertragen werden. Die Druckdatei 18 enthält die auf das Dokument gedruckten Daten. Das zu bedruckende Aufzeichnungsmaterial 19 wird ebenfalls dem ID-Drucksystem zugeführt. Es kann Aufzeichnungsmaterial jeder Art sein, z.B. Bahnen von einer Rolle, Einzelblätter, vorgefaltete Materialien, Papier, lien, Papier, Folie usw. Das unbedruckte Material ist bereits mit dem Transponder bestückt, wobei der Transponder auf das Aufzeichnungsmaterial aufgeklebt, auflaminiert oder auch im Zuge der Materialherstellung in das Aufzeichnungsträger-Material integriert sein kann.

Der Aufzeichnungsträger kann zudem mit einer magnetisierbaren Schicht versehen sein, auf der Informationen magnetisch gespeichert und gelesen werden können. Durch das Einbringen magnetisch codierter Zeichen kann auch diese Magnetschicht (Ferritelemente) Daten aufnehmen.

Mit dem Transponder-Lesekopf 20 wird die im Transponder unlöschbar gespeicherte Seriennummer in das ID-Drucksystem eingespielt. Mit den optischen Lesegeräten 21, zu denen das Kamerasystem 9 und/oder der Barcode-Scanner 8 zählen, können die gedruckten Informationen des Dokuments erfasst und dem ID-Drucksystem 15 zur Verfügung gestellt werden. Dazu können z.B. Lieferschein-Daten oder persönliche Daten wie die.Adresse zählen.

Das ID-Drucksystem 15 ist ein komplex geregeltes intelligentes Drucksystem, mit dem verschiedenste Ergebnisse produziert werden können. Beispielsweise können vom Administrator 16 Abfragen an das ID-Drucksystem 15 gerichtet werden und es erfolgen Meldungen, beispielsweise wo ein bestimmtes Dokument mit einer bestimmten Dokumentennummer zu einem bestimmten Zeitpunkt im ID-Drucksystem 15 verarbeitet wird.

Vom ID-Drucksystem 15 werden des weiteren die spezifischen Dokumenten-Daten in einer Steuerungsdatei 22 zur Verfügung gestellt. Die Steuerungsdatei enthält geprüfte Daten, d.h. Daten, die vom gedruckten Dokument gelesen wurden und die mit von der Applikation 17 zugeführten Daten hinsichtlich ihrer Integrität verglichen wurden. Beispielsweise kann im ID-Drucksystem 15 geprüft werden, ob die vom Lesekopf 20 gelesene Transponder-Seriennummer übereinstimmt mit der von der Applikation übertragenen Transponder-Seriennummer. Zusätzlich wird geprüft, ob die von der Applikation 17 ermittelten Druck-ID-Daten mit denen vom optischen Lesegerät 21 ermittelten Druck-ID-Daten übereinstimmt. Falls diese Übereinstimmung gegeben ist, werden die jeweiligen geprüften Daten in die Datei 22 abgespeichert, welche für spätere Weiterverarbeitungsschritte des Dokuments wiederum zur Verfügung gestellt wird, um die Dokumenten- bzw. Datenintegrität an dieser Stelle wiederum herzustellen.

Zusatzdaten, geprüfte Druck-Identifikationsdaten sowie geprüfte Transponderdaten werden außerdem in einer Liste 23 abgelegt. Zusatzdaten können Daten sein, die aus dem Anwenderprogramm 17 direkt dem ID-Drucksystem zur Verfügung gestellt wurden oder Daten, die aus der Druckdatei stammen und direkt übernommen werden oder auch Daten, die im Zuge des Druckvorgangs auf das Aufzeichnungsmaterial gedruckt und mit dem optischen System 21 gelesen wurden. In der Datei 22 erfolgt dann eine Verknüpfung dieser Daten. Steuerdaten und ggf. andere Daten können in den auf dem Dokument befestigten Transponderschreibkopf 24 eingespeichert werden. Am Ende des Dokumentenproduktionsvorganges wird gedrucktes Material 25 auf einer Rolle, gestapelt oder blattweise ausgegeben.

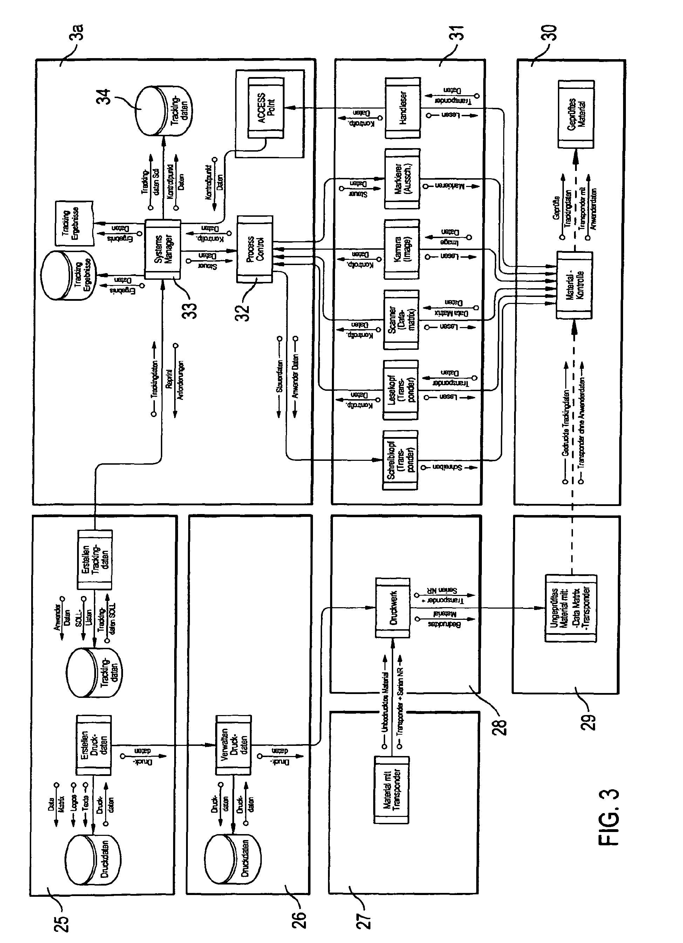

In Figur 3 sind nochmals Systemkomponenten eines Drucksystems wie dem ID-Drucksystem 15 dargestellt. In einem Anwender-Computer 25 werden Druckdaten erstellt und an einen Druckserver 26 gesandt. Dort werden die Druckdaten aufbereitet, z. B. von verschiedenen Eingangs-Formaten in ein bestimmtes Ausgabeformat konvertiert. Die aufbereiteten Druckdaten werden dann an das Druckwerk 28 übermittelt. Zusätzlich wird dem Druckwerk auch Aufzeichnungsmaterial 27 (von Rolle, von Stapel oder von Blatt) zugeführt. Der Transponder ist dabei bereits vor dem Drucken fest mit dem Aufzeichnungsmaterial 29 verbunden. Das ungeprüfte, gedruckte Material 29, auf dem ein zwei-dimensionaler Barcode (Data-Matrix) sowie der Transponder als Datenträger fest aufgebracht sind, kann auf Rolle, als Stapel oder als Blattware einer Kontrollstelle 30 zugeführt werden. Dort wird zunächst der Transponder auf seine ordnungsgemäße Funktion hin überprüft, in dem der Transponder mit einem Lesekopf gelesen und das Leseergebnis an den Steuerungscomputer 3a übermittelt wird. Im Steuerungscomputer 3a ist dazu eine Prozeßkontrolleinheit 32 sowie ein System-Manager 33 vorgesehen. Der Prozeßkontroller 32 meldet an den System-Manager 33 die Kontrollpunktdaten und erhält vom Systems-Manager Steuerdaten. Hinsichtlich der Transponder-Identitätsnummer, die für jeden Transponder einmalig durch den Hersteller des Transponders vorgegeben wird, kann die gelesene Transpondernummer mit den in der Verfolgungsdaten-Datei 34 gespeicherten Daten verfügbarer Transponder verglichen werden. Falls diese Transpondernummer identisch ist, wird vom System-Manager 33 über den Prozeßkontroller 32 an den Transponder-Schreibkopf der Auftrag gegeben, Tracking-Daten auf den Transponder zu schreiben. Falls die Transpondernummer nicht mit Transpondernummen in der Verfolgungsdaten-Datei 34 übereinstimmt, so wird über die Prozeßkontrolle 32 ein Befehl an den Markierer gegeben, das Dokument optisch als ungültig zu markieren und/oder an den Transponder-Schreibkopf der Befehl gegeben, das Dokument elektronisch zu entwerten. Auch der Data-Matrix-Scanner und die Kamera der Kontrolleinheit liefern die von ihnen gemessenen Dokumenten-daten an die Prozeßkontrolle und auch sie werden im SystemsManager hinsichtlich ihrer Integrität mit den im Steuerungscomputer 3a abgespeicherten Dokumentendaten verglichen. Falls es zu Diskrepanzen zwischen den gelesenen und abgespeicherten Dokumentendaten kommt, so meldet der System-Manager 33 an den Anwendercomputer 25 und/oder an den Druckserver 26, daß das jeweilige Dokument neu gedruckt werden muß. Dies wird dann vom Anwender-Computer bzw. vom Server veranlaßt.

Mit dem Handleser 11 der Kontroll-Einheit 31 ist es möglich, das gedruckte Dokument in der Anwendung praktisch an beliebigen Stellen zu erfassen, die im Transponder gespeicherten Daten zu lesen, sie an den Steuerungscomputer 3a über eine Schnittstelle (Accesspoint) dem Systemsmanager 33 zuzuführen und vom Systemsmanager 33 Daten über den Handleser wiederum in den Speicherchip des Dokuments zu speichern. Dies ist z.B. bei Anwendung des Warenversands von großem Vorteil, weil an den verschiedenen Stationen des Warenversands dokumentiert werden kann, dass die Ware dort zu einem bestimmten Zeitpunkt vorliegt. Über die berührungslose Kommunikation zwischen dem Transponder-Chip und dem Handleser 11 ist es möglich, auch nur schlecht zugängliche Transponder lesen zu können, beispielsweise wenn eine zu erfassende Waren-Palette mit anderen Waren zugestellt ist. Waren und Dokumente oder Personen, die mit unterschiedlichen Transponder-ID-Nummern versehen sind, können zum Tracking und Tracing damit ausgewertet werden.

Weiterhin ist es möglich, das genannte Konzept vorteilhaft auch nur bei der Erfassung und Verfolgung von Personendaten einzusetzen, beispielsweise im Bereich des Ausweisdrucks und im Bereich von Sportveranstaltungen, bei denen jeder Teilnehmer einer Transponder-Chip trägt und an bestimmten Kontrollpunkten erfasst wird. Die Erfindung erlaubt dabei die fehlerlose Produktion von Dokumenten, in dem die in elektronischen Startlisten angegebenen Personen- und Startnummerdaten abgeglichen werden mit den auf Starter-Dokumenten inkl. dem dabei verwendeten Transponder-Chip.

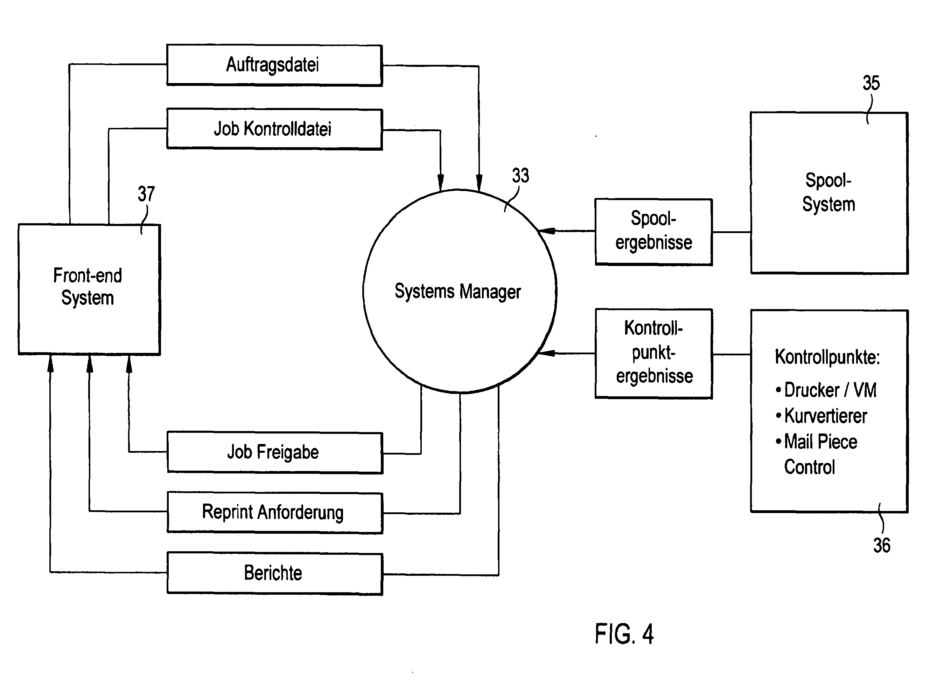

Figur 4 zeigt nochmals einige Funktionalitäten des Systemmanagers 33. Er erhält von einem Spoolsystem 35, in dem die Druckdateien an einen Druckserver oder an einen Drucker übermittelt worden sind, Spoolergebnisse in Form von Steuerungsdaten. Desweiteren erhält der Systems Manager 33 die an verschiedenen Kontrollpunkten, wie z.B. einem Drucker, einem Kuvertierer oder einer Kontrollstelle für Postversandstücke (Mail-Piece-Control) erfassten Daten und steuert basierend auf diesen Ergebnissen den Druckvorgang in dem Drucksystem 37. Dazu gibt er Druckaufträge frei, fordert Wiederholungsdrucks und Berichte vom Drucksystem an und bekommt von diesem eine Auftrags-Kontrolldatei sowie eine Auftragsdatei.

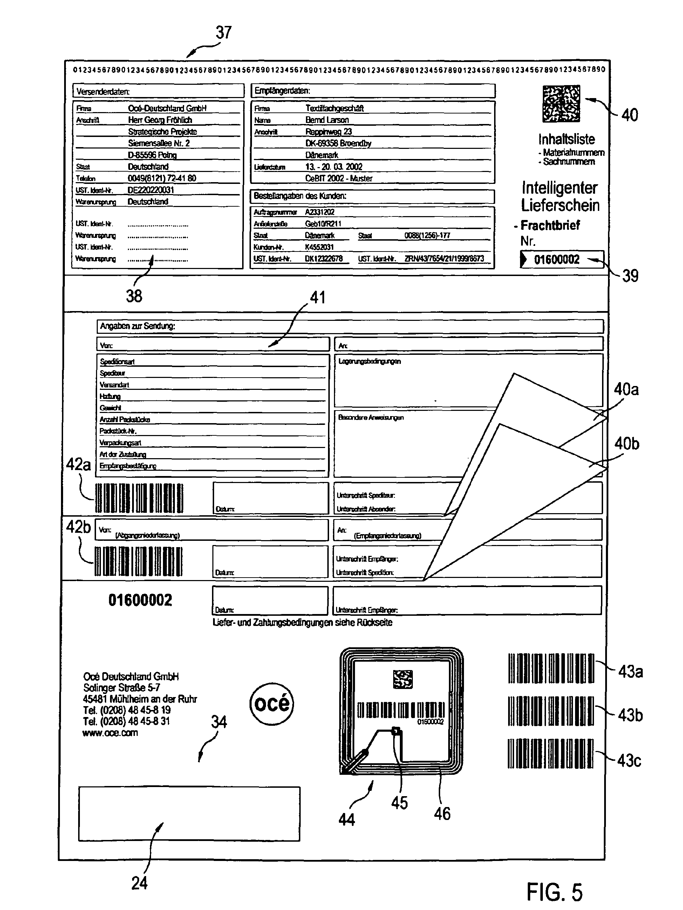

In Figur 5 ist ein gedrucktes Frachtbrief-Dokument 37 gezeigt, auf dem in einem oberen Bereich 38 verschiedene Informationen wie Name, Anschrift usw. eines Versenders gedruckt sind sowie Namen, Anschrift eines Empfängers und eine Frachtbriefnummer in einem Klarschrift-Feld 39. Die in den Bereichen 38 und 39 stehenden Informationen sind des weiteren in einem zweidimensionalen Barcode (Data-Matrix) 40 hinterlegt. Zusätzlich können in diesem Barcode-Feld weitere Angaben zur Warenart und zu anderen, den Warenversand begleitenden Informationen hinterlegt sein.

Das gedruckte Frachtbrief-Dokument 37 hat außerdem einen Belegbereich 40, in dem Angaben zur Sendung hinterlegbar sind und mehrere übereinander liegende Belege 40a, 40b entlang einer Abrisslinie 41 als Zwischenbelege für verschiedene Leserstationen vorgesehen sind. Auf jedem Beleg 40a, 40b sind jeweils eindimensionale Barcodes 42a, 42b aufgedruckt in denen für den Versandauftrag spezifische Daten wie Versender, Empfänger, Frachtbriefnummer und/oder die Herstellernummer des auf dem Frachtbrief auflaminierten Transponders 44 gespeichert ist. Das gedruckte Frachtbrief-Dokument 37 weist weiterhin im unteren Bereich 3 Klebeetiketten 43a, 43b, 43c auf, die identisch zu den Barcodes 42a, 42b sind. Sie sind dazu bestimmt, auf die zu transportierende Ware aufgeklebt zu werden. Über die eindeutige Zuordnung der Frachtbriefnummer und/oder der unlöschbar gespeicherten Seriennummer des Transponders 32 lässt sich damit die Ware eindeutig zum Frachtbrief zuordnen. Der Transponder 44 weist einen elektronischen Transponder-Chip 45 sowie eine Transponder-Antenne 46 auf. Im Transponder-Chip 45 ist zum einen die Transponder-Seriennummer unlöschbar gespeichert und zum anderen ein beschreibbarer, veränderbarer und/oder löschbarer SpeicherBereich vorgesehen, in dem anwendungssspezifische Daten gespeichert, gelesen und verändert werden können. Im Bereich 34 weist das Dokument zusätzlich eine magnetisierbare Schicht 24 auf, in der ebenfalls dokumentbezogene Daten, insbesondere die Transponder-Nummer, abspeicherbar sind. Auch hier gilt, dass Personen, denen eine eindeutige ID-Nummer (per Ausweis) zugeordnet ist, diese ID-Nummer mit der ID-Nummer von Waren und Dokumenten verglichen werden kann, um Ablaufprozesse zu sichern und zu verfolgen.

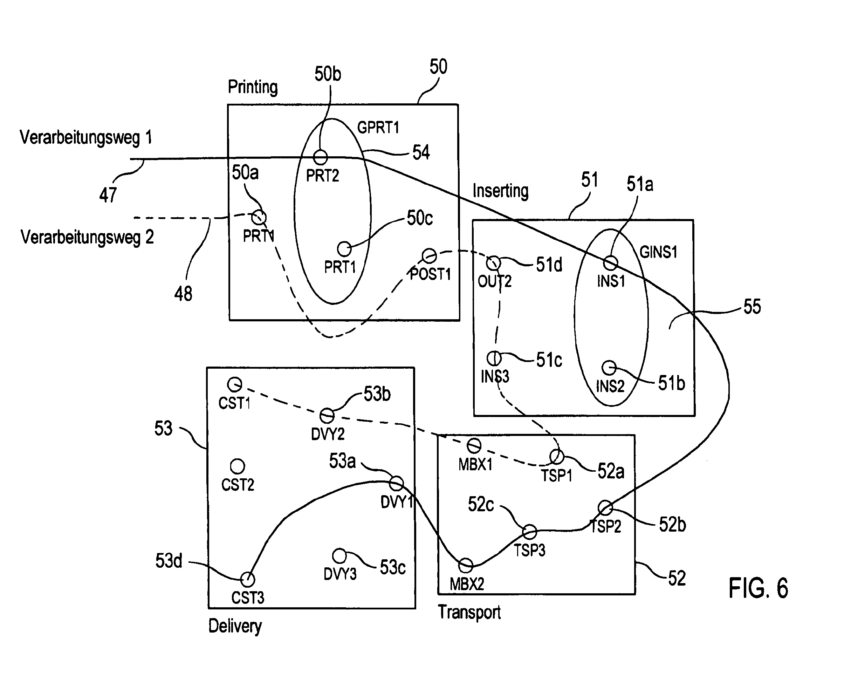

In Figur 6 sind zwei Verarbeitungsprozesse für zwei Aufzeichnungsträger 47, 48 zur Herstellung und Verarbeitung gedruckter Dokumente dargestellt, die verschiedene Prozessstationen und Kontrollplätze aufweisen. In einer Druckprozesstufe 50 sind drei verschiedene Drucker 50a (PRT1), 50b (PRT2)und 50c (PRT3) gezeigt, in einer Kuvertierprozessstufe 51 drei Kuvertierer 51a (INS1), 51b (INS2) und 51c (INS3) sowie ein Schneidegerät 51d (CUT). In einer Transportprozesstufe 52 sind drei Transportsysteme 52a (TSP1), 52b (TSP2) und 52 c (TSP 3) vorgesehen. In einer Auslieferungsstufe 53 sind drei Postboxensysteme 53a (DVY1), 53b (DVY2) und 53c (DVY3) vorgesehen.

Bei einem derartigen System ergibt sich folglich eine Vielzahl von Kombinationsmöglichkeiten der Geräte, die je nach Druckauftrag individuell zur Bearbeitung des Auftrags zusammengeschalten werden. Dementsprechend ergibt sich beispielsweise ein erster Verarbeitungsweg 47, in dem ein Dokument mit dem Drucker 50b gedruckt wird, im Kuvertierer 51a kuvertiert wird und dann verschiedene Transporteinrichtungen 52 a, 52b durchläuft, bevor er dem Postboxensystem 53a und 53c zugeführt und in einer Ausgabestation 53d (CST3) zum Postversand bereitgestellt wird.

Ein zweiter Verarbeitungsweg 48 für einen anderen Dokumentenproduktionsauftrag wird vom Drucker 50a gedruckt, durchläuft einen Zwischenspeicher POST 1 und ein Schneidegerät CUT 2, bevor er dem Kuvertiergerät 51c (IMF 3) zugeführt wird und über die nachfolgenden Transporteinrichtungen 52a (TSP 1) und MBX 1 einem Postboxensystem 53b (DVY 2) zugeführt und an die Ausgabestation CST 1 ausgegeben wird.

Das Dokumentenproduktionssystem ist somit sehr flexibel konfigurierbar und kann leicht an die jeweiligen Erfordernisse des Druckauftrags wie gewünschte Produktionsgeschwindigkeit, zusätzliches Einfügen von vorbedrucktem Material im Kuvertierer etc. angepaßt werden. Dabei ist sowohl die Auswahl der beteiligten Verarbeitungsgeräte als auch die Auswahl der entsprechenden Kontrollpunkte frei konfigurierbar. Jedem Gerät können dabei eine beliebige Zahl von Kontrollpunkten zugeordnet werden und umgekehrt, so daß sich zwischen der Anzahl der Geräte und der Anzahl der Kontrollpunkte eine N zu M Relation ergibt. N und M bezeichnen ganze Zahlen.

Geräte und/oder Kontrollpunkte können dabei auch zu Gruppen zusammengefaßt werden, wenn der Verarbeitungsweg an einem Verarbeitungsschritt mehr als einen Kontrollpunkt durchlaufen kann und dem Kontrollpunkt bzw. dem Gerät jeweils dieselbe Bedienperson zugeordnet ist. In Figur 6 sind beispielsweise die Geräte bzw. Kontrollpunkte 50c und 50b zur Drucker-Kontrollpunktgruppe 54 zusammengefaßt und die Kuvertierer 51a und 51b zur Kuvertierer-Kontrollpunktgruppe 55.

An den jeweiligen Kontrollpunkten werden die Dokumentendaten selektiv hinsichtlich der Datenintegrität überprüft und falls notwendig eine Aussteuerung und ein Neudruck (reprint) des Dokuments veranlasst. Dazu wird mit den Eingangsgrößen des ID-Drucksystems (vgl. Fig. 2) und/oder mit den von der erstellten Datei ein Abgleich der Dokumentendaten durchgeführt.

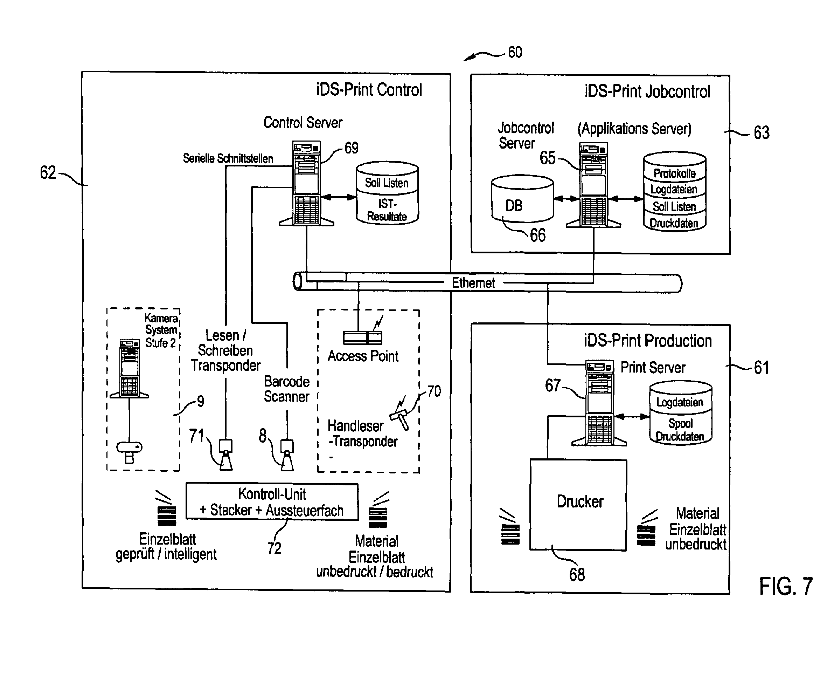

In Figur 7 ist ein dem Dokumentenproduktionssystem 1 ( Figur 1) entsprechendes Dokumentenproduktionssystem 60 gezeigt, bei dem statt eines Druckgerätes, das auf bahnförmige Aufzeichnungsträger druckt, ein Druckgerät vorgesehen ist, das auf Einzelblätter druckt. Andere, im wesentlichen identische Komponenten werden in Figur 7 jeweils mit gleichen Bezugszeichen versehen. Das zweite Dokumentenproduktionssystem 60 ist in vier Funktionsblöcke gegliedert, nämlich in einen Druckfunktionsblock 61, einen Druckkontrollfunktionsblock 62, einen Druckauftragsfunktionsblock 63 sowie eine Netzwerkverbindung 64, mit der verschiedene Geräte der Funktionsblöcke datentechnisch miteinander verbunden sind. Im Druckauftragsfunktionsblock 63 ist ein Jobkontroll-Server 65 (Applikationsserver) enthalten, der die wesentlichen Funktionen zum Erstellen der Druckaufträge und zur Überwachung des korrekten Ausdrucks der Druckaufträge übernimmt. Er realisiert insbesondere folgende Funktionen:
1. Erstellen personalisierter Druckaufträge durch Zusammenfügen eines statischen Layouts (Master) sowie eines variablen Layouts, in dem die variablen Inhalte aus der Datenbank 66 entnommen werden sowie ggf. das Eingeben geänderter Daten in die Datenbank 66.
2. Erstellung von personalisierten Druckdaten Dabei werden die Daten des Layoutmasters dokumentenweise mit den variablen Inhalten der Datenbank 66 verbunden und so Originaldruck-Daten erzeugt. Mit den Originaldruck-Daten verknüpft ist die Erstellung einer sogenannten Soll-Liste, mit der die korrekte Erstellung der Dokumente dokumentweise überwacht werden kann. Um nach einem Fehldruck ein bestimmtes Dokument erneut zu drucken und diesen Druckvorgang zu überwachen, wird ggf. eine Wiederholungsdruck-Liste (Reprintlist) erstellt.
3. Erstellung von Provedruckdaten Mit dieser Funktion des Jobkontroll-Servers 65 können Probedaten zum Zwecke der Demonstration bzw. des Tests ausgedruckt werden. Dabei wird mangels Notwendigkeit keine Soll-Liste erzeugt.
4. Erstellung von unpersonalisierten Druckdaten Mit dieser Funktion können Formulare erzeugt werden, die zu einem späteren Zeitpunkt mit personalisierten Daten ergänzt werden, z. B. auch mit einem externen, hier nicht dargestellten Kartendrucker. Die Funktion eignet sich insbesondere dafür, Formulare farbig vorzudrucken und die personalisierten Daten in einem späteren Druckvorgang in die farbigen Formulare nachzudrucken. Für den Formulardruck sind keine Solllisten notwendig.
5. Aufteilung der Druckdaten Mit dieser Funktion ist es möglich, einen größeren Druckauftrag in kleinere Blöcke zu zerlegen, was insbesondere vorteilhaft ist, wenn dem Drucksystem ein Druckgerät angeschlossen ist, das eine relativ geringe Speicherkapazität hat, so dass der größere Druckauftrag nicht vollständig in den Speicher des Druckgeräts aufgenommen werden kann.
6. Masterspeichern Bei Ausführung des vollständigen Druckauftrages mit den personalisierten Daten aus der Datenbank 66 werden dann die Daten des Formulars (Masters) von einem Speicher des Druckgerätes abgerufen.
7. Kontrolldaten Mit dieser Funktion übt der Jobkontrollserver 65 die Kontrolle über den aktuellen Druckauftrag aus, erstellt/sammelt Protokolldaten und erstellt/sammelt Statistikdaten.

Im Druckfunktionsblock 61 ist ein Druckserver 67 enthalten, an den ein Druckgerät 68 angeschlossen ist. Der Druckserver 67 steht mit dem Jobkontroll-Server 65 in einem Slave-Master Verhältnis, wobei die eingehenden Druckaufträge im Druckserver 67 in der Reihenfolge ihres Eingangs nacheinander abgearbeitet werden, d. h. automatisch gerastert und in eine Druck-Warteschlange gelegt werden. Das Druckgerät 68 ist als Einzelblattdruckgerät ausgebildet (Cutsheet Printer), wobei der Bediener das Gerät startet und stoppt sowie die zum Drucken verwendeten Materialien auswählt. Der aktuelle Druckstatus wird im Druckgerät 68 erfasst und an den Jobkontroll-Server 65 gemeldet. Insbesondere beim Löschen von Druckaufträgen durch den Bediener muss der betreffende Auftrag durch den Jobkontroll-Server 65 wieder neu aufgesetzt werden.

Im Druckkontrollfunktionsblock 62 ist ein Kontrollserver 69 enthalten, der über die Netzwerkverbindung 64 mit dem Jobkontroll-Server 65 und dem Druckserver 67 verbunden ist. Im Druckkontrollfunktionsblock 62 können sowohl vor dem Druckprozess die an den Aufzeichnungsträgern angebrachten Transponder geprüft werden und die Prüfung protokolliert werden als auch nach dem Druckprozess eine Endkontrolle des Druckergebnisses und/oder der Funktionsfähigkeit der Transponder durchgeführt werden.

Weiterhin sind auf dem Kontroll-Server folgende Funktonen verfügbar:
1. Soll-Listen, die vom Jobkontroll-Server 65 an den Kontroll-Server 69 übertragen wurden können, ggf. nach laufender Nummer sortiert, verwaltet werden.
2. Druckidentifikationsnummern (z. B. laufende Nummern), die vom Dokument mittels des Barcodelesers 8, des Handlesers 70, des Kamerasystems 9 und/oder dem Lese/Schreibkopf 71 vom Transponder gelesen wurden, werden mit den Nummern der Soll-Listen auf Integrität geprüft.
3. Transponderdaten, insbesondere die Transponder-Identifikationsnummer können gelesen werden, insbesondere können auch Schreibvorgänge des Lese/Schreibkopfs 71 initiiert werden.
4. Erstellung von Ist-Resultaten auf Einzelblattbasis sowie Zuordnung der entsprechenden, gelesenen Transponderdaten.

Übergabe der Ist-Resultate an den Jobkontroll-Server 65, auf Einzelblatt-Basis
Steuerung und Einrichtung einer Kontroll-Einrichtung 72, Auswertung der Ist-Resultate zum Zwecke des Aussteuerns

Dabei sind folgende Situationen möglich:
a) Unbedrucktes Material mit integriertem Transponder wird geprüft. Einzelblätter mit defekten, nicht lesbaren Transpondern werden ausgesteuert, d. h., die Funktionen 3, 4, 5 und 6 des Kontroll-Servers 69 werden aktiv.
b) Bedrucktes Material mit integriertem Transponder, aber unpersonalisiertem Druck wird geprüft, die Einzelblätter haben keine DruckIdentifikationsnummer, aber Einzelblätter mit defekten, nicht lesbaren Transpondern werden ausgesteuert und die Funktionen 3, 4, 5 und 6 des Kontroll-Servers 69 werden aktiv.
c) Bedrucktes Material mit integriertem Transponder und personalisiertem Druck wird geprüft, d. h. eine Druckidentifikationsnummer ist vorhanden. Ausgesteuert werden Einzelblätter mit defekten Transpondern, Einzelblättern, bei denen die Druckidentifikationsnummer doppelt vorkommt, Einzelblätter, deren Druckidentifikationsnummer in der Soll-Liste nicht vorhanden ist und Einzelblätter, bei denen die Druckidentifikationsnummer mittels Kamerasystem 9 und/oder Barcode-Scanner 8 nicht lesbar ist, d. h. die Funktionen 1" 2, 3,4, 5 und 6 des Kontroll-Servers 69 werden aktiv.

Das Aufzeichnungsmaterial der Dokumentenproduktionssysteme 1 bzw. 60 ist insbesondere aus Papier, es kann jedoch auch aus jedem anderen, bedruckbaren Material wie z.B. Kunststoff oder Metall bestehen bzw. einer Kombination, z. B. in einem Schichtaufbau.

Als Druckgeräte bzw. Drucksysteme können nicht nur Schwarz-Weiß-Drucker sondern auch Kombinationen von Druckern vorgesehen sein, beispielsweise können zwei hintereinander geschaltete Einzelblatt- oder Endlos-Bahndrucker sowie Farbdrucker und Schwarz-Weiß-Drucker miteinander kombiniert werden. Obwohl in den Figuren 1 und 3 jeweils getrennte Leseköpfe und Schreibköpfe für den Transponder beschrieben sind, kann dort jeweils auch ein kombinierter Lese/Schreibkopf eingesetzt werden.

Die vorbeschriebenen, auf Transpondern basierten Dokumentenproduktionssysteme werden im Rahmen dieser Beschreibung auch iDS-print genannt, wobei iDS für Identification System steht. Das iDS umfasst neben iDS-print auch iDS-event und iDSlogistics, die nachfolgend beschrieben werden.

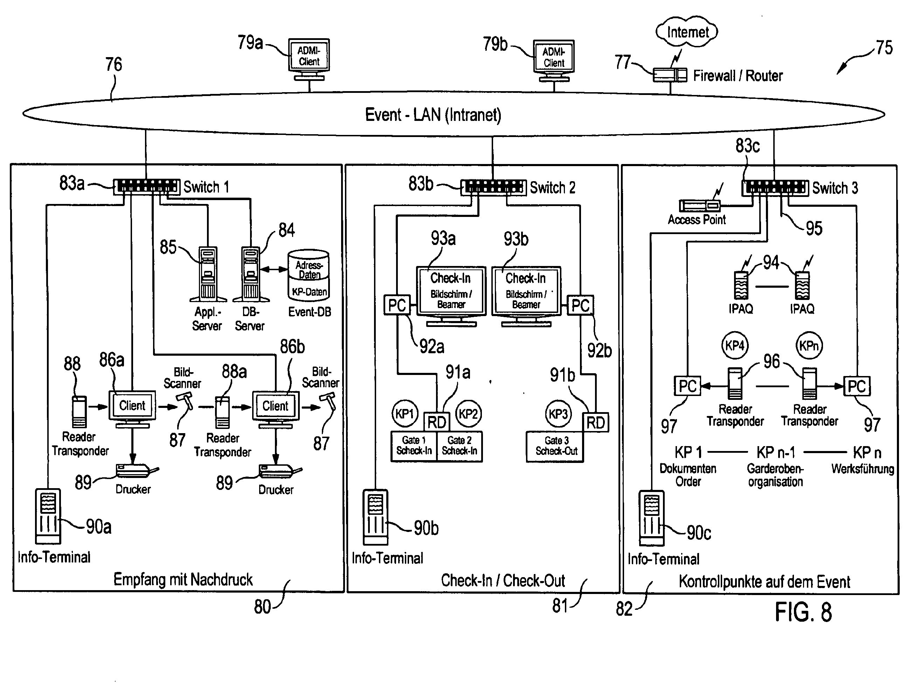

In Figur 8 ist ein transponderbasiertes Veranstaltungsverwaltungssystem 75 (IDS-Eventsystem) gezeigt. Es umfasst ein lokales Netzwerk 76 (Intranet), das über einen Rooter 77 bzw. eine entsprechende Firewall mit dem Internet 78 verbunden ist. Am Intranet 76 sind verschiende Terminal-Computer 79a, 79b direkt angeschlossen. Weiterhin sind am Intranet 76 drei Funktionsgruppen vorgesehen, die über 3 Schalter an das Intranet 76 angeschlossen sind. Die Funktionsgruppen entsprechen 3 Funktionseinheiten, die bei einer Veranstaltung wie einer Messe, einem Konzert oder dergleichen benötigt werden, nämlich einer Empfangseinheit 80, einer Einlass/Auslass-Einheit (Check-In/Check-Out) 81 und einer Kontrollpunkt-Einheit 82. Je nach Größe und Räumlichkeit der Veranstaltung können die einzelnen Einheiten mit den ihnen zugeordneten Geräten einen eigenen Schalter (Switch) zugeordnet werden oder zu einem gemeinsamen Switch zusammengefasst werden. Im in Figur 8 gezeigten Beispiel ist die Empfangseinheit 80 über einen ersten Schalter 83a am Intranet 76 angeschlossen. Dem Empfangsbereich zugeordnet ist der Datenbankserver 84, auf dem die von den Besuchern von der Veranstaltungsverwaltung erfassten Daten verwaltet werden und z. B. genutzt werden, um nachträglich über Einzelblatt/Kartendrucker ein personifiziertes Dokument drucken zu können, z. B. bei Verlust eines Ausweises/Dokuments. Dazu zählen insbesondere Adressdaten und Kontrollpunktdaten, wie der Zeitpunkt des Betretens bzw. Verlassens der Messe, Angaben des Besuchers über Interessenschwerpunkte, Daten über das Besuchen bestimmter Messestände, Daten über die Hinterlegung von Kleidungs- bzw. Gepäckstücken in der Garderobe, Zuordnung des Besuchers zu einer bestimmten Besuchergruppe (Presse, Hersteller, Kunde) usw. Mit dem Datenbank-Server 84 können nicht nur die Daten verwaltet werden sondern auch alle mit einer Datenbank möglichen Auswertungen von Daten erfolgen. Zur Einbindung der Daten in andere Dokumente bzw. Weiterverarbeitung der Daten in anderen Anwenderprogrammen ist des Weiteren ein Anwendungsserver 85 an den Schalter 83a angeschlossen. Weiterhin sind am ersten Schalter 83a verschiedene Client-Computer 86a, 86b angeschlossen, mit denen ankommende Kunden, für die vorab noch kein Messeausweis gedruckt wurde, neu erfasst und für diese ein neuer Messeausweis gedruckt werden können. Dazu werden vom Kunden seine persönlichen Daten wie Name und Adresse erfasst. Dies kann entweder manuell mittels einer Tastatur erfolgen oder über einen Bildscanner 87, der eine Visitenkarte abscannt und die Daten an ein Texterkennungsprogramm im Anwendungsserver 85 übermittelt. Zur Erstellung eines Ausweises wird dann ein Blanko-Ausweis, der bei einer Neuerfassung z. B. über einen Kartendrucker personifiziert wurde, der mit einem Transponder versehen ist, über das Transponderlesegerät 88 gezogen, wodurch eine im Transponder gespeicherte individuelle Kennnummer erfasst wird und im Datenbankserver 84 oder im Anwendungsserver 85 mit den Adressdaten des Besuchers zusammengeführt wird. Dadurch ist für den Messeablauf gewährleistet, dass an jedem Kontrollpunkt, an dem die Daten des Transponders gelesen werden, eine korrekte Zuordnung zu den Daten des Kunden erfolgt. In einem weiter entwickelten Ausführungsbeispiel der Empfangseinheit 80 werden die Daten des Transponders im Lesegerät 88 nicht nur gelesen, sondern durch eine entsprechende Schreibfähigkeit des Geräts 88 auch bestimmte Kundendaten wie dessen Namen, Adresse, Firmenzugehörigkeit usw. im Transponder 88 hinterlegt, so dass auch der Transponder an sich ein individuelles Dokument für die Zugehörigkeit des Ausweises zu einer Person ist. Zum Drucken von Eintrittskarten ist ein Druckgerät 89 vorgesehen, in dessen Einzugsbereich ein Transponderlesegerät 88a montiert ist. Zum Drucken wird das zuvor im Transponderlesegerät 88a gescannte Blankoformular in das Druckgerät 89 eingezogen und bestimmte Daten des Besuchers, insbesondere dessen Namen, Vornamen und Firmenzugehörigkeit auf die Eintrittskarte gedruckt. Gleichzeitig werden die im Transponderlesegerät 88a gelesenen Daten an einen zentralen Datenbankserver 84 übermittelt, in dem sie mit den gedruckten Besucherdaten verknüpft werden. Der Besucher kann dann bereits im Empfangsbereich der Veranstaltung an dem in der Empfangseinheit 80 angeschlossenen Info-Terminal 90a mit seiner frisch gedruckten Eintrittskarte und dem darauf befindlichen Transponder aktuelle Messedaten abrufen, wie einen Messeplan, aktuelle Vortragsveranstaltungen oder dergleichen. Im Infoterminal 90a wird dazu mittels eines eingebauten Transponderlesegeräts die Transpondernummer und/oder die im Transponder gespeicherte Namensinformation des Benutzers erfasst und im Datenbankserver 84 die Transponderdaten mit den im Datenbankserver 84 gespeicherten Daten verglichen, so dass entschieden werden kann, welche Veranstaltungsdaten für den jeweiligen Besucher angezeigt werden. Beispielsweise kann man bei Messen, deren Vortragsveranstaltungen an gesonderte Eintrittsgelder gebunden sind, die Vortragsveranstaltung nur denjenigen Besuchern anzeigen, die die entsprechenden Gebühren bezahlt haben. Über die Transponderdaten können auch persönliche Daten des Besuchers zur Anzeige am Info-Terminal 90a freigeschaltet werden wie z.B. Identifizierungsdaten und/oder der Standort seiner Garderobe oder anderer persönlicher Gegenstände.

Die Einlass/Auslass-Einheit 81 steht bei einer Veranstaltung im Bereich der Einlass/Auslass-Schleusen. Sie ist über einen Schalter 83b an das Intranet 76 angeschlossen. An den Eingangsschleusen (Gate 1 bzw. Gate 2) ist ein Transponder-Lesegerät 91a vorgesehen, das über einen Computer 92a am zweiten Schalter 83b angeschlossen ist. Ein mit dem Computer 92a verbundener Bildschirm 93a dient insbesondere dazu, den Besucher, der durch eine Eingangsschleuse in das Veranstaltungsgelände eintritt und dessen Ausweis vom Lesegerät 91a erfasst wird, besucherindividuell zu begrüßen, beispielsweise unter Anzeige des Besuchernamens. Statt eines Bildschirms kann auch ein entsprechender Beamer ggf. mit Leinwand verwendet werden. Im Messegelände selbst kann im Bereich der Einlass/Auslasszone wiederum ein Infoterminal 90b stehen, auf dem sich der Besucher individuell oder messeallgemein informieren kann. Im Bereich der Austrittsschleusen kann ein entsprechendes Transponder-Lesegerät 91b, ein Computer 92b und ein damit verbundener Bildschirm 93b vorgesehen sein, auf dem insbesondere ein besucherindividueller Abschiedstext eingeblendet wird, wenn der Besucher die Messe verlässt. Für Dateneingabe/Datenausgabeoperationen auf dem Veranstaltungsgelände sind verschiedene Kontrollpunkte KPi vorgesehen, wobei i eine natürliche Zahl ist. Sie sind in der Kontrollpunkt-Einheit 82 zusammengeschlossen und über einen dritten Schalter 83c mit dem Intranet 76 verbunden. Die Kontrollpunkte können für verschiedenste Zwecke vorgesehen sein, beispielsweise zum Abrufen persönlicher oder allgemeiner Messeinformationen über ein Info-Terminal 90c, zum Ordern von Dokumenten, im Garderoben-Bereich zur Garderobenorganisation oder zur Organisation von Führungen über das Veranstaltungsgelände und/oder über einzelne Messestände. Die Einrichtungen der Kontrollpunkte können dabei entweder direkt an den dritten Schalter 38c angeschlossen und dadurch mit dem Intranet 76 verbunden werden oder sog. IPAQ-Stationen sein, die über ein drahtloses Netzwerk (WLAN) und einen Zugangspunkt 95 am dritten Schalter 83c angeschlossen sind. Über die IPAQ-Stationen 94 können sowohl Transponderdaten berührungslos gelesen und/oder geschrieben werden als auch Daten einschließlich Tracking-Daten sowie Zusatzinformationen aus der Datenbank des Datenbankservers 84 abgerufen bzw. in diese geschrieben werden. Auf den IPAQ-Stationen können weiterhin Veranstaltungsinformationen wie Hallenpläne, Preisinformationen usw. für Besucher und Aussteller vorinstalliert werden.

Die IPAQ-Stationen sind mobile Stationen und damit variable Kontrollpunkte. Zusätzlich zu diesen Kontrollpunkten können im Veranstaltungsbereich auch feste Kontrollpunkte mit Transponder-Lese und/oder Schreibgeräten 96 vorgesehen sein. Diese sind wiederum über PCs 97 am dritten Schalter 83c angeschlossen und somit am Intranet 76. Als variable Kontrollpunkte können auch Zugangsschleusen vorgesehen sein, die innere Bereiche des Veranstaltungsgeländes besonders absichern, wie sie bereits in der Einlass/Auslass-Einheit vorgesehen sind.

Variable IPAQ-Stationen 94 und/oder drahtgebundene Kontrollpunkte 96, 97 können auch im Empfangsbereich vorgesehen sein, insbesondere für Garderoben und Gepäckaufbewahrungsdienstleistungen. Dabei ist insbesondere vorgesehen, auf dem Transponder eines Besucherausweises die jeweilige Garderobennummer für Kleidung bzw. Gepäck abzuspeichern und dieselbe Information in der Datenbank des Datenbankservers 84 zu hinterlegen. Dadurch ist eine doppelte Absicherung der Garderobeninformation gegeben, die sowohl für den Fall, dass die Datenbankverbindung ausgefallen ist als auch für den Fall, dass ein Besucherausweis verloren geht, vorteilhaft ist. In beiden Fällen kann anhand der Personen-Identifikation (Name, Adresse) eine sichere Zuordnung und damit Ausgabe von Kleidung und Gepäck erfolgen. Zusätzlich kann vorgesehen sein, dass der Besucher die Möglichkeit hat, sich über ein beliebiges Infoterminal 90a, 90b, 90c oder über eine IPAQ-Station 94 mittels des transponderbasierten Besucherausweises zu informieren, wo seine Garderobe bzw. Gepäck abgelegt ist. Dies ist insbesondere dann vorteilhaft, wenn die Garderobe in mehrere Garderobenbereiche unterteilt ist und der Besucher den genauen Ort seiner Garderobenablage vergessen hat.

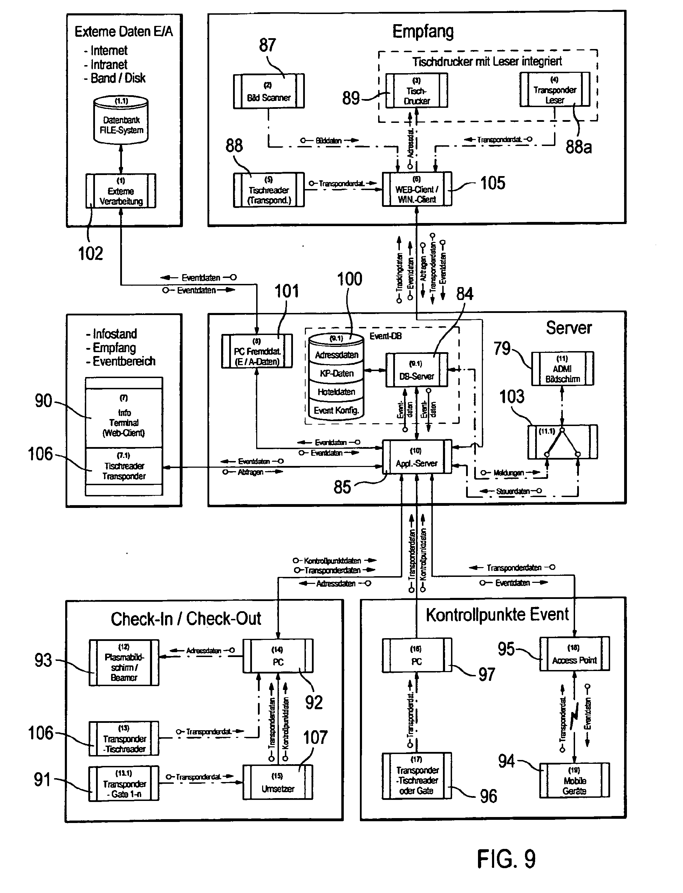

Figur 9 zeigt die Datenverarbeitungs-technischen Strukturen des IDS-Event-Systems mit seinen zentralen Hardwarekomponenten, deren Hauptverbindungen und Datenflüssen. Bei den Verbindungen geben durchgezogene Linien eine drahtgebundene Netzwerkverbindung wieder, wie z. B. eine 100-Mbit-Ethernet- U Verbindung. Die mit Blitz-Symbol versehene Übertragung ist eine Funkstrecke, d. h. drahtlose Netzwerkverbindung. Mit gestrichelten Linien sind Punkt-zu-Punkt-Verbindungen zwischen zwei Hardware-Komponenten dargestellt. Kern der Anwendung ist der Datenbank-Server 84 und die ihm zugeordnete Datenbank 100. Über den Datenbank-Server 84 erfolgt das Speichern der Veranstaltungsdaten (Eventdaten), welche von dem Applikations-Server 85 geliefert werden. Auf dem Datenbank-Server 84 läuft ausschließlich die Datenbank-Software mit dazugehöriger Applikations-Software zum Ein/Auslagern der Eventdaten. Als Betriebssysteme eignen sich jedes Betriebssystem, beispielsweise Windows/NT, Unix oder Linux. In der Datenbank 100 sind alle Eventdaten enthalten. Für die Datenbank eignen sich alle Datentypen, insbesondere SAP-Datenbanken, Microsoft-SQL, Orakel, Informix oder SYBAFE. Weiterhin können Datenbank-Daten von externen Datenbanken über eine Schnittstelle 101 eingelesen werden. Die Schnittstelle 101 kann insbesondere einen eigenständigen Computer umfassen, mit dem die Fremddaten verarbeitet werden in ein vorgegebenes, für die Datenbank 100 angepaßtes Format. Weiterhin kann über den entsprechenden Computer ein unberechtigter Zugriff von einem Fremdsystem abgewehrt werden. Insbesondere bei Einspielung der Fremddaten über Datenträger (CD, Diskette) werden diese auf Viren überprüft, bevor die Eingabedaten in das IDS-Eventsystem eingespielt werden. Von externen Verarbeitungscomputern 102 können insbesondere Eingaben wie Adressdaten, Hotelreservierungsdaten etc. übergeben werden. Die Datenübertragung kann neben den oben genannten Aufzeichnungsträgern auch über Intranet, Internet oder Bandlaufwerke erfolgen. An den beiden Servern 84, 85 ist ein Administrations-Bildschirm 79 angeschlossen, der über einen Umschalter 103 wahlweise eine Bedienung/Anzeige zwischen den beiden Servern umschaltbar erlaubt.

Für die Gesamtsteuerung aller am lokalen Netz angeschlossenen Geräte und Computer ist ein IDS-Event-Computerprogramm vorgesehen, das vorzugsweise auf dem Anwendungs-Server 85 abläuft. Es steuert den gesamten Datenverkehr zwischen den beteiligten Ein/ausgabegeräten und dem Datenbank-Server 84. Das IDS-Event-Computerprogramm kann in kleineren Anwendungen, d. h. in Systemen, bei denen nur wenige System-Komponenten, insbesondere Kontrollpunkte, vorgesehen sind, wahlweise auch auf dem Datenbank-Server 84 ablaufen, wobei dann auf den Anwendungs-Server 85 verzichtet werden kann. Auf dem Datenbank-Server 84 läuft dann zusätzlich zu dem Datenbank-Computerprogramm das IDS-Event-Computerprogramm ab. In diesem Fall können noch weitere Programme, die ansonsten auf dem Anwendungs-Server 85 ablaufen, nunmehr auf dem Datenbank-Server 84 ablaufen.

In der Empfangseinheit ist der Bildscanner 87 vorgesehen, der über eine Punkt-zu-Punkt-Verbindung mit einem Windows-Client 105 des Empfangs-Computers 86a verbunden ist. Zusätzlich ist der Bildscanner 87 über eine Netzwerkverbindung mit einem Web-Client 104 des Empfangs-Computers 86a verbunden. Die Punkt-zu-Punkt-Verbindung bzw. Netzwerkverbindung kann jeweils auch umgekehrt eine Netzwerkverbindung bzw. Punkt-zu-Punkt-Verbindung sein. Zur Eingabe der Besucherdaten stehen mehrere Varianten zur Verfügung. In einer ersten Variante werden die Besucherdaten von Vorlagen, wie Visitenkarten über den Windows-Client 105 manuell eingegeben. In einer zweiten Variante werden die Besucherdaten von den Vorlagen mit dem Bildscanner 87 abgetastet um z. B. am Empfang die Kundendaten schnell und ohne Wartezeit für den Besucher als Bild erfassen zu können. Dabei erfolgt bereits eine eindeutige Zuordnung zwischen dem erfassten Bild und der Besuchernummer bzw. Transpondernummer des zugehörigen Besucherausweises. Das elektronisch erfasste Bild kann dann zu einem späteren Zeitpunkt verwendet werden um die Kundendaten bzw. einen verbleibenden Rest der Kundendaten über die Eingabemasken in das IDS-Event-System einzugeben. Bei der Eingabe ist sichergestellt, dass keine Verwechslungen von Kundendaten und Kundennummern erfolgen können. Die Maskeneingaben können sowohl über den Windows-Client 105 (Applikations-Client) als auch über den Web-Client 104 erfolgen. Sowohl der Web-Client 104 als auch der Windows-Client 105 sind mit einer Passwort-Funktion ausgestattet, so dass je nach Anwender und dessen Berechtigungsfreischaltung unterschiedliche Funktionen auf dem Applikations-Server 85 bzw. dem Datenbank-Server 84 ausgeführt werden können. Innerhalb des Gesamtsystems werden je nach Aufgabenbereich und Anforderung verschiedene Windows - und/oder Web-Clients installiert. Die Windows-Clients 105 greifen dabei über den Datenbank-Server 84 auf die IDS-Datenbank 100 zu. Die Web-Clients 104 greifen über den Applikations-Server 85 auf die IDS-Datenbank 100 zu. Die Windows- bzw. Web-Clients haben je nach Bedarf eine Punkt-zu-Punkt-Verbindung oder eine Netzwerkverbindung zum Bildscanner, zu einem Transponderlese/Schreibgerät und/oder zu einem Drucker.

Das Druckgerät 89 in der Empfangseinheit wird bei einer Veranstaltung vorzugsweise dazu verwendet, Ausweise für Besucher, die sich vorab nicht registriert/angemeldet haben, zu drucken. Weiterhin ist mit diesem Druckgerät 89 insbesondere vorgesehen, Ausweise nachzudrucken, die verlorengegangen sind, beispielsweise seitens des Veranstalters aufgrund logistischer Probleme oder seitens des Besuchers nach Erhalt des ursprünglichen Besucherausweises. Beim Nachdruck von Besucherausweisen ist es insbesondere vorgesehen, den verlorengegangenen Ausweis in der IDS-Datenbank 100 als ungültig zu kennzeichnen, was insbesondere über die Transponder-Identifikationsnummer erfolgt. Wenn dieser Ausweis später an einem der Kontrollpunkte auftaucht, werden sämtliche für den Besucher zur Verfügung stehenden Funktionen gesperrt und ggf. auf einer Anzeigeeinrichtung ein Hinweis ausgegeben, dass dieser Ausweis gesperrt ist.

Für das Ausdrucken eines Ausweises in der Empfangseinheit wird ein Druckgerät 89 eingesetzt, das sowohl Papier als auch plastifiziertes Material bedrucken kann. Beim Bedrucken des Ausweises ist sicherzustellen, dass die korrekte Nummer des Transponders mit den korrekten Adressdaten des Besuchers zusammengeführt werden, d. h. dass die Daten auf dem Ausweis übereinstimmen mit den Daten der IDS-Datenbank 100. Hierzu ist vorgesehen, dass die Erfassung der Transponder-Identifikationsnummer in unmittelbarem zeitlichem, räumlichem und/oder funktionellem Zusammenhang mit dem Bedrucken des Ausweises erfolgt. Insbesondere ist vorgesehen, bei einem integrierten Transponder im Ausweis innerhalb des Druckvorgangs die Transponder-Identifikationsnummer zu lesen und dem gedruckten Namen bzw. der entsprechenden Adresse in der Datenbank zuzuordnen. Eine zeitliche Zuordnung kann dabei in der Weise erfolgen, dass jeweils nur ein Ausweis bedruckt wird und der Ausweis unmittelbar nach dem Drucken mit einem integrierten Leser oder über einem Tischlesegerät 88 erfasst wird und dem zuvor gedruckten Namen bzw. der Adresse zugeordnet wird. Umgekehrt ist es auch möglich, zunächst die Transponder-Identifikationsnummer zu erfassen und dann unmittelbar danach den Ausweis zu drucken, wobei ein nächster Ausweis erst gedruckt wird, wenn der Zuordnungsvorgang eines zuvor gedruckten Ausweises vollständig abgeschlossen ist. Weiterhin kann eine räumliche Zuordnung dadurch erfolgen, dass die Transponder-Leseeinrichtung 88 unmittelbar neben dem Eingabebereich des Tischdruckgerätes bzw. unmittelbar neben dem Ausgabebereich des Tischdruckgerätes angeordnet ist. Die sicherste Lösung für eine eindeutig korrekte Zuordnung zwischen Transponder-Identifikationsnummer und Name/Adresse der gedruckten Daten ist jedoch eine funktionelle Zwangskopplung zwischen Lesevorgang und Druckvorgang. Hierbei kann z. B. vorgesehen sein, dass der Ausweis in eine Zwangsführung eingegeben wird und dann vollautomatisch zunächst durch die Druckeinrichtung zum Bedrucken und dann vollautomatisch durch die Transponderleseeinrichtung transportiert wird bzw. umgekehrt.

Über das Info-Terminal 90 können sich Besucher, Hersteller, Aussteller und Presse über die Veranstaltung informieren, wobei der jeweiligen Gruppe unterschiedliche Rechte zugeordnet sein können. Damit können Informationen bis zur Einzelperson hinterlegt werden. Die Anmeldung erfolgt über Passwort oder über die im Ausweis enthaltene Transponder-Identifikationsnummer. Das Info-Terminal 90 wird dazu als Web-Client konzipiert und greift über den Anwendungs-Server 85 auf die IDS-Datenbank 100 zu. Der Web-Client des Info-Terminals 90 ist dazu weiterhin über eine Punkt-zu-Punkt-Verbindung mit einem Tischlesr für Transponder verbunden. Im Bereich von Eingangs/Ausgangsschleusen ist ein Computer 92 vorgesehen, der insbesondere Begrüßungstexte und Namensdaten am Bildschirm 93 anzeigt. An den Schleusen können wahlweise Tischleser für Transponder 106 oder Transponder-Gates 91 eingesetzt werden. Um mehrere Transponder-Gates an einem Eingangs/Ausgangspunkt einzusetzen, sind Umsetzer 107 vorgesehen.

In der Kontrollpunkteinheit sind Transponderlesegeräte 96 wie Tischleser oder Gates vorgesehen, die über Netzwerkverbindung oder Punkt-zu-Punkt-Verbindung mit dem Kontrollpunkt-PC 97 verbunden sind. Ergänzend oder stattdessen kann vorgesehen sein, einen Miniatur-Computer 94, der eine Schnittstelle für drahtlose Netzwerkverbindung zu einem Verbindungspunkt 95 hat, vorzusehen. Die Miniaturcomputer können weiterhin insbesondere eine Einheit zum Lesen der Transponder aufweisen, sowie die Möglichkeit beinhalten, die Event-Daten zu speichern oder auszuwählen.

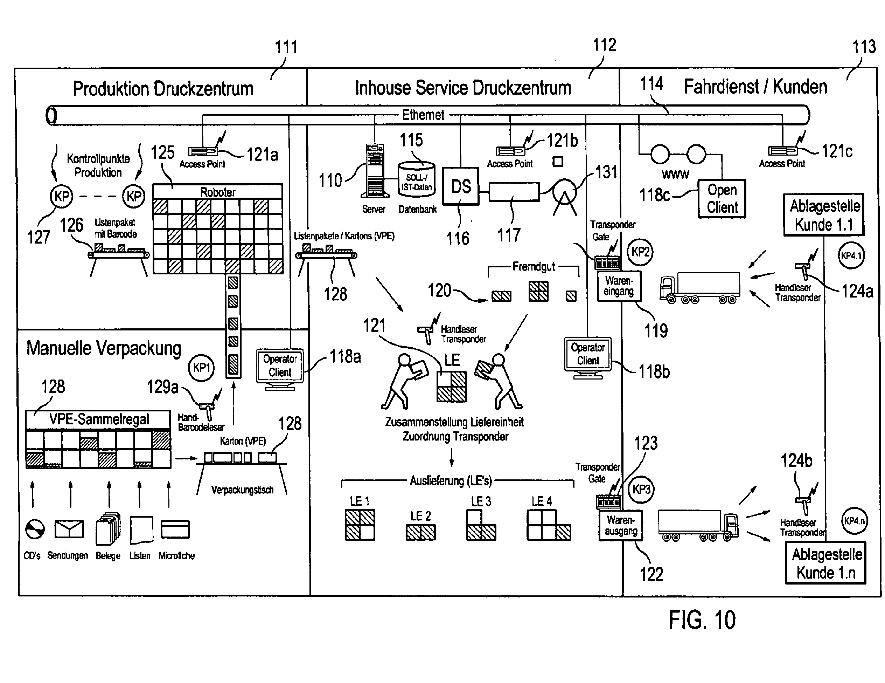

In Figur 10 ist gezeigt, wie ein erfindungsgemäßes Druckproduktionssystem für ein Warenlogistikkonzept verwendet wird. Dazu sind ein Produktionszentrum 111, ein Inhouse-Servicezentrum 112 und ein Auslieferungsbereich 113 über eine Netzwerkverbindung, insbesondere über ein Local Area Network (LAN) und/oder über das Internet miteinander verbunden. An die Netzwerkverbindung 114 ist ein Server 110 angeschlossen, auf dem eine Logistik-Datenbank 115 abgespeichert ist. Die Daten des Servers 110 können über Terminals 118a, 118b, 118c eingegeben, abgerufen und/oder verändert werden. Zur Produktion von Lieferscheinen, die einen Transponder enthalten, ist ein Druckserver 116 vorgesehen, an den ein Druckgerät 117 angeschlossen ist. Dabei werden jeweils zeitlich, räumlich und/oder funktionell eng gekoppelt die Transponder-Daten (Transponder-Identifikationsnummer) von einem zu bedruckenden Dokument (Lieferschein) abgerufen und in der Datenbank 115 mit aktuellen Lieferdaten wie einer Liefernummer, einem Liefergegenstand, einer Lieferadresse oder dgl. verbunden. Genauso werden Waren, die am Wareneingang 119 eintreffen bzw. deren Lieferscheine mit einem Transponder-Handleser erfasst und berührungslos an einen Verbindungspunkt 121c übermittelt, der an die Netzwerkverbindung 114 angeschlossen ist. So eingegangenes Fremdgut 120 wird im Inhouse-Servicezentrum 112 wahlweise entpackt und dem Produktionszentrum 111 zugeführt oder zur Zusammenstellung von Liefereinheiten 121 zugeführt. In diesem Zusammenhang wird ein mit einem Transponder ausgestatteter Lieferschein auf dem Druckgerät 117 ausgedruckt und gleichzeitig in der Datenbank 115 charakteristische Daten über den Lieferinhalt hinerlegt. Die so zusammengestellten Liefereinheiten (LE1, LE2, LE3, LE4) werden am Warenausgang 122 zur Abholung bereit gestellt. Sobald eine Liefereinheit den Warenausgang verlässt, wird vom Warenbegleitschein/Lieferschein die Transpondernummer an einem Transponder-Gate 123 erfasst und die Auslieferung, d. h. der aktuelle Lieferstatus in der Datenbank 115 hinerlegt, wo sie mit allen angeschlossenen Terminals abgerufen werden kann. Das Transponder-Gate 123 ist über den Verbindungspunkt 121b berührungslos per Funk mit dem Netzwerk 114 verbunden. Sobald die Lieferung beim Empfänger eintrifft, werden die Lieferscheine mit einem Transponder-Handleser 124b erfasst und über den Verbindungspunkt 121c in die Netzwerkverbindung 114 eingespielt, so dass der Empfang bzw. aktuelle Aufenthaltsort der Waren in der Datenbank 115 gespeichert wird.

Erweitert zum dargestellten System kann über eine eindeutige Identifizierung der Waren das Operating der eingesetzten Personen gekoppelt werden, indem zum zeitlichen Ablauf eines Prozesses auch die Person identifiziert werden kann, die den Ablauf zu diesem Zeitpunkt verantwortlich führt, indem auch für diese Person ein Transponder im Ausweis integriert wird und diese ID-Nummer in der Datenbank hinterlegt wird.

Produktionsseitig können verschiedene Listenpakete 126 erstellt werden, die jeweils einen Barcode aufweisen. Weiterhin sind produktionsseitige Kontrollpunkte 127 vorgesehen, die die Barcodes erfassen und funkgesteuert über den Zugangspunkt 121a die Daten an die Datenbank 115 melden. Anhand der aufgedruckten Barcodes kann ein Roboter 125 die Listenpakete zu Verpackungseinheiten (Kartons) 128 zusammenstellen. Solche Verpackungseinheiten 128 können ebenfalls über ein Verpackungs-Sammelregal 130 zusammengestellt werden, über entsprechende Hand-Barcodeleser 129 erfasst und in die Datenbank 115 eingetragen werden und dem Roboter 125 zugeführt werden. Aus den Verpackungseinheiten 128 können dann wiederum Liefereinheiten 121 zusammengestellt werden, die wie im oben genannten Fall mit einem Warenbegleitschein versehen werden, der einen Transponder trägt. Dabei werden die Barcodes der Verpackungseinheiten erfasst und zeitlich, räumlich und/oder funktionell gekoppelt mit der Erstellung des Warenbriefs die Barcodes-Daten und die Transponderdaten (Identifikationnummer) in der Datenbank 115 hinterlegt. Im Verpackungs-Einheits-Sammelregal 128 können neben Verpackungen auch Compact-Disks, Sendungen, Belege, Listen und Microfish abgelegt werden.

In den Ausführungsbeispielen wurden sowohl kabelgebundene Netzwerke als auch drahtlose Netzwerke beschrieben. Es ist klar, dass an den jeweiligen Stellen jeweils beide Arten von Netzwerken verwendbar sind.

Im Rahmen der Erfindung können verschiedene Identifizierungsmerkmale und dazugehörige Lese/Schreib-und/oder Prüfgeräte und Druckeinheiten modular verbunden werden. Insbesondere die Transbonderbasierten Identifizierungsmerkmale können dabei interaktiv, d.h. lesend und schreibend mit einer Datenbank in Wechselbeziehung stehen, was z.B. bei Logistiksystemen vorteilhaft zur Aktualisierung der Standortinformationen verwendet werden kann. Weitere Identifizierungsmerkmale können z.B. sein ein Magnetcodierungsstreifensystem (threads), die das Druckgut enthalten kann oder ein biometrisches System (Fingerabdruck, Iris, genetisch), dessen Daten insbesondere kryptisch in den Transponder geschrieben und/oder in der Datenbank hinterlegt werden können. Weiterhin können ein Hologrammspender vorgesehen sein, der zusätzliche Sicherheitsmerkmale in den Aufzeichnungsträger bringt, vorgesehen sein oder andere Codierungen/Verschlüsselungen, die im Aufzeichnungsträger enthalten sind und die mit entsprechenden Lese/Schreibgeräten bearbeitet werden können. Auch druckend aufbringbare magnetische Codierungen, beispielsweise magnetic ink recognition Toner (MICR Toner) und entsprechende Lesegeräte können das System ergänzen. Auch sogenannten unsichtbare Tinte kann zur Codierung der Dokumente verwendet werden und entsprechende Lesegeräte zur Authentifizierung angewandt werden. Diese Lesegeräte sind systemkompatibel zu den Lesegeräten im Ablaufprozess, wenn dort die Waren/Dokumente oder Ausweise zum Tracking und Tracing gelesen werden.

Die Erfindung kann insbesondere als Computerprogramm (Software) realisiert sein. Sie kann damit als Computerprogramm-Modul, als Datei auf einem Datenträger wie einer Diskette oder CD-Rom oder als Datei über ein Daten- bzw. Kommunikationsnetz verbreitet werden. Derartige und vergleichbare Computerprogramm-Produkte oder Computerprogramm-Elemente sind Ausgestaltungen der Erfindung. Der erfindungsgemäße Ablauf kann mit einem Computer, in einem Druckgerät und/oder in einem Drucksystem mit vorgeschalteten oder nachgeschalteten Datenverarbeitungsgeräten Anwendung finden. Dabei ist klar, daß entsprechende Computer, auf denen die Erfindung angewandt wird, weitere, an sich bekannte technische Einrichtungen wie Eingabemittel (Tastatur, Mouse, Touchscreen), einen Mikroprozessor, einen Daten- bzw. Steuerungsbus, eine Anzeigeeinrichtung (Monitor, Display) sowie einen Arbeitsspeicher, einen Festplattenspeicher und eine Netzwerkkarte enthalten können.

### Bezugszeichenliste

- 1: Dokumenten-Produktionssystem
- 2: Netzwerk
- 3: Client-Computer für Applikation
- 3a: Steuerungscomputer
- 4: Druckgerät
- 4a: Abroller
- 5: Papierbahn
- 6: Transponder-Schreibkopf
- 7: Transponder-Lesekopf
- 8: Barcode-Scanner
- 9: Kamerasystem
- 9a: Kamera-Computer
- 9b: Kamera
- 10: Markierer
- 11: Hand-Transponderleser
- 12: Host-Computer
- 13: Druckserver
- 14: Zugangspunkt
- 15: ID-Drucksystem
- 16: Administrator-Konsole
- 17: Anwendung
- 18: Druckdatei
- 19: Aufzeichnungsmaterial
- 20: Lesekopf-Transponder
- 21: Optische Lesegeräte
- 22: Steuerungsdatei
- 23: Liste
- 24: magnetisierbare Schicht
- 25: Anwender-Computer
- 26: Druckserver
- 27: Aufzeichnungsmaterial
- 28: Druckwerk
- 29: Bedrucktes Material
- 30: Kontrollstelle
- 31: Kontroll-Einheit
- 32: Prozeßkontrolle
- 33: System-Manager
- 34: Verfolgungsdaten-Datei
- 35: Spool-System
- 36: Kontrollpunkte
- 37: Frachtbrief-Dokument
- 38: gedruckte Informationen
- 39: Klarschrift-Feld
- 40: Belegbereich
- 40a: Beleg
- 40b: Beleg
- 41: Abrißlinie
- 42a: Barcode
- 42b: Barcode
- 43a,: 43b, 43c Klebe-Etiketten
- 44: Transponder
- 45: Transponder-Chip
- 46: Transponder-Antenne
- 47: Aufzeichnungsweg
- 48: Aufzeichnungsweg
- 49: Druckprozessstufe
- 50a,: 50b, 50c Drucker
- 51: Kuvertierprozessstufe
- 51a, 51b, 51c: Kuvertierer
- 52: Transport-Prozessstufe
- 52a, 52b, 52c: Transportelemente
- 53: Versandprozessstufe
- 53a, 53b, 53c: Versandelemente
- 55: Kuvertierer-Kontrollgruppe

- 60: zweites Dokumentenproduktionssystem
- 61: Druckfunktionsblock
- 62: Druckkontrollfunktionsblock
- 63: Druckauftragsfunktionsblock
- 64: Netzwerk
- 65: Jobkontroll-Server

- 66: Datenbank
- 67: Druckserver
- 68: Druckgerät
- 69: Kontrollserver
- 70: Handleser
- 71: Lese/Schreibkopf für Transponder
- 72: Kontroll-Einrichtung

- 75: Veranstaltungsverwaltungssystem
- 76: Intranet
- 77: Router
- 78: Internet
- 79a, 79b: Terminalcomputer
- 80: Empfangseinheit
- 81: Einlass/Auslass-Einheit
- 82: Kontrollpunkt-Einheit
- 83a,: 83b, 83c Schalter
- 84: Datenbank-Server
- 85: Anwendungs-Server
- 86a, 86b: Client-Computer
- 87: Bildscanner
- 88: Transponder-Lesegerät
- 89: Eintrittskarten-Drucker
- 90a, 90b, 90c: Info-Terminal
- 91a, 91b: Transponder-Lesegerät
- 92a, 92b: Computer
- 93a, 93b: Bildschirm
- 94: IPAQ-Station
- 95: Zugangspunkt
- 96: Transponderlese/Schreibgerät
- 97: Kontrollpunkt-PC

- 100: Datenbank
- 101: Datenbank-Schnittstelle
- 102: externer Computer
- 103: Umschalter
- 104: Web-Client
- 105: Windows-Client
- 106: Tischleser
- 107: Umsetzer

- 110: Server
- 111: Produktionszentrum
- 112: Inhouse-Servicezentrum
- 113: Auslieferungsbereich
- 114: Netzwerkverbindung
- 115: Logistik-Datenbank
- 116: Druckserver
- 117: Druckgerät
- 118a,: 118b, 118c Terminal
- 119: Wareneingang
- 120: Fremdgut
- 121: Liefereinheit
- 121a: Zugangspunkt
- 121c: Verbindungspunkt
- 122: Warenausgang
- 123: Transponder-Gate
- 124a, 124b, 124c: Transponder-Handleser
- 125: Roboter
- 126: Barcode-Listenpakete
- 127: Produktions-Kontrollpunkte
- 128: Verpackungs-Einheit
- 129: Hand-Barcodeleser
- 130: Verpackungs-Sammelregal
- 131: Lesestation

## Patentansprüche

1. Verfahren zur Produktion eines gedruckten Dokuments (37) mit einer eindeutigen Kennung,
wobei ein Aufzeichnungs-träger (5, 27) mit einem elektronischen Datenträger (44) in Form eines Transponders mit einem individuellen Erkennungsmerkmal verwendet wird, der berührungslos elektronisch lesbar ist,
wobei der Aufzeichnungsträger (5, 27) mit Informationen bedruckt wird, **dadurch gekennzeichnet,**
- **dass** der Transponder (44) in einem elektronische Speicherbereich eine nicht veränderbare Kennung aufweist,
- **dass** im Zuge des Dokumentenproduktionsvorgangs in einer Lesestation (88, 131) die Kennung des Datenträgers (44) berührungslos gelesen wird,
- **dass** im Zuge des Dokumentenproduktionsvorgangs Daten des gedruckten Dokuments und der Kennung des Datenträgers (44) in einer Datei verknüpft werden, und
- **dass** das Lesen der Kennung und die Verknüpfung der Daten in unmittelbarem zeitlichen, räumlichen und/oder funktionellen Zusammenhang des Druckvorgangs erfolgen.

2. Verfahren nach Anspruch 1, wobei die Datei zur Überprüfung der Echtheit des Dokuments (37) in einem dem Dokumentenproduktionsvorgang nachgeschalteten Dokumentenbearbeitungsvorgang derart verwendet wird, dass ihr Inhalt mit gelesenen Daten von dem Dokument (37) verglichen wird.

3. Verfahren nach Anspruch 1 oder 2, wobei die Daten des gedruckten Dokuments und des Datenträgers (44) mit Daten eines Anwenderprogramms in der Datei verknüpft werden.

4. Verfahren nach einem der vorhergehenden Ansprüche, wobei der Transponder (44) bereits vor dem Druckvorgang auf dem Aufzeichnungsträger (5, 27) aufgebracht wird.

5. verfahren nach einem der Ansprüche 1 bis 4, wobei auf dem Aufzeichnungsträger (5, 27) zusätzlich eine in Klarschrift gedruckte Kennummer (39), ein insbesondere 2-dimensionaler optisch lesbarer Barcode (40, 42a, 42b, 43a, 43b, 43c) und/oder eine Information in einer magnetisierbaren Schicht (24) aufgebracht wird.

6. Verfahren nach Anspruch 5, wobei die in Klarschrift gedruckte Kennummer identisch zu der im Transponder (44) gespeicherten Kennummer, zu einer im optischen Barcode (40, 42a, 42b, 43a, 43b, 43c) und/oder zu einer in der magnetischen Schicht (24) gespeicherten Kennummer ist oder eine andere Kennnummer der Kennnummer des Transponders zugeordnet wird.

7. Verfahren nach einem der vorhergehenden Ansprüche, wobei auf dem Dokument (37) eindeutige Kennzeichen einer Person, insbesondere ein Fingerabdruck, ein genetischer Fingerabdruck und/oder Angaben über die Iris der Person hinterlegt werden und im Zuge des Dokumenten-Produktionsprozesses diese Daten ebenfalls in der Datei abgelegt werden.

8. Verfahren nach einem der vorhergehenden Ansprüche, wobei anhand des gedruckten Dokuments (37) zur Identifikation einer Person und/oder Ware die Daten auf dem Dokument (37) mit den Daten der im Zuge des Dokumenten-Produktionsprozesses erstellten Datei verglichen werden.

9. Verfahren nach einem der vorhergehenden Ansprüche, wobei die Daten auf dem Datenträger (44) verschlüsselt abgespeichert werden.

10. Verfahren nach einem der vorhergehenden Ansprüche, wobei das Druckergebnis, die Kennung des Datenträgers (44) und/oder das elektronische Schreibergebnis überprüft werden und im Falle eines Fehldrucks, einer fehlerhaften Kennung und/oder eines fehlerhaften Schreibergebnisses automatisch das fehlerhafte Dokument (37) ausgesondert und die nochmalige Erzeugung des Dokuments veranlaßt wird.

11. Verfahren nach einem der vorhergehenden Ansprüche, wobei der Druckvorgang mit mindestens einem elektrografischen Druckgerät (4) erfolgt und das elektronische Schreiben in den Datenträger (44) und/oder das berührungslose lesen der Kennung nachdem der Aufzeichnungsträger (5, 27) das Druckgerät (4) verlassen hat.

12. Verfahren nach einem der vorhergehenden Ansprüche, wobei an einem Kontrollpunkt, der zumindest eine Schreibstation (6) aufweist und an der das Dokument (37) erfasst wird, im Datenträger (44) eine Information hinterlegt wird, aus der erkennbar ist, dass das Dokument (37) an dem Kontrollpunkt war.

13. Verfahren nach Anspruch 12, wobei an dem Kontrollpunkt zusätzlich Daten vom Dokument (37) erfasst und in einer zentralen Verfolgungs-Datenbank abgespeichert wird, dass das Dokument an dem Kontrollpunkt war.

14. Verfahren nach einem der vorhergehenden Ansprüche, wobei der unmittelbare Zusammenhang durch eine zeitliche und/oder räumliche Zwangskopplung hergestellt wird.

15. Verfahren nach einem der vorhergehenden Ansprüche, wobei der unmittelbare Zusammenhang durch eine funktionelle Zwangskopplung hergestellt wird.

16. Verfahren nach Anspruch 15, wobei die Zwangskopplung durch mechanische und/oder elektronische Einrichtung erfolgt.

17. Verfahren nach Anspruch 15 oder 16, wobei die Zwangskopplung durch eine Zuführeinrichtung hergestellt wird, die den Aufzeichnungsträger (5, 27) zur Druckstation (89, 117) und zur Lesestation (88, 131) führt.

18. Verfahren nach einem der Ansprüche 14 bis 17, wobei der Datenträger (44) automatisch in einer Lesestation ausgelesen wird und automatisch zwischen der Lesestation und der Druckstation transportiert wird.

19. Verfahren nach einem der Ansprüche 14 bis 18, wobei in der Druckstation ein nachfolgendes Dokument erst gedruckt wird, nachdem die Zuordnung zwischen den Daten des Datenträgers (44) und den gedruckten Daten erfolgt ist.

20. Verfahren nach einem der Ansprüche 14 bis 19, wobei das Ergebnis des Datenlesens vom Datenträger (44) überprüft wird und bei Vorliegen eines Fehlers dasselbe Dokument nochmals mit einem anderen Datenträger (14) gedruckt wird.

21. Verfahren nach einem der Ansprüche 14 bis 20, wobei mit dem fehlerfreien gedruckten Dokument eine Verfolgung von Personen und/oder Waren erfolgt.

22. Verfahren nach einem der Ansprüche 14 bis 21, wobei als Dokument ein Frachtbrief oder ein Lieferschein oder ein Versandlabel gedruckt wird.

23. Verfahren nach einem der Ansprüche 14 bis 21, wobei als Dokument ein Ausweis gedruckt wird.

24. Verfahren nach einem der vorhergehenden Ansprüche, wobei als individuelles Erkennungsmerkmal biometrische Daten auf dem Transponder (44) oder in einer transpondergeführten Datenbank gespeichert werden.

25. Verfahren nach einem der vorhergehenden Ansprüche, wobei das gedruckte Dokument (37) als Besucherausweis zur Besucherauthentifizierung einer Veranstaltung mittels eines computergesteuerten Netzwerks (76) verwendet wird.

26. Verfahren nach Anspruch 25, wobei das gedruckte Dokument (37) als Eintrittskarte personifiziert wird, zunächst ohne Gültigkeit erstellt wird und erst in einem späteren Legitimationsschritt gültig gemacht wird, indem die der Eintrittskarte zugeordnete Datei derart geändert wird, dass sie von "ungültig" auf "gültig" gesetzt wird.

27. Verfahren nach Anspruch 25, wobei das gedruckte Dokument (37) als Eintrittskarte personifiziert wird und und in einem späteren Schritt ungültig gemacht wird, indem die der Eintrittskarte zugeordnete Datei derart geändert wird, dass sie von "gültig" auf "ungültig" gesetzt wird, wenn die Eintrittskarte verloren oder entwendet wurde.

28. Verfahren nach Anspruch 25, wobei das gedruckte Dokument (37) als Besucherausweis in einer Kontrolleinheit (82) zur besucherspezifischen Anzeige von Information und/oder zur Zuordnung von Gegenständen verwendet wird.

29. Verfahren nach Anspruch 28, wobei in der Kontrolleinheit (82) ein Computer mit einer kabellosen Verbindung zum Netzwerk (76) verwendet wird.

30. Verfahren nach Anspruch 28 oder 29, wobei zur Zuordnung eines Gegenstandes eine dem Gegenstand entsprechende Information in einer am Netzwerk (76) angeschlossenen Datenbank (100) und/oder auf dem Datenträger (44) abgespeichert wird.

31. Verfahren nach Anspruch 30, wobei zusätzlich eine Information über den Kontrollpunkt, an dem der Gegenstand erfasst wurde, abgespeichert wird.

32. Verfahren nach einem der Ansprüche 25 bis 31, wobei in der Empfangseinheit (80) mit einem Bildscanner (87) eine Vorlage, die Daten eines Besuchers enthält, abgetastet wird, eine erste Gruppe der Besucherdaten in einer am Netzwerk (76) angeschlossenen Datenbank (100) abgelegt und mit dem elektronischen Erkennungsmerkmal eines Aufzeichnungsträgers verbunden wird und in unmittelbarem zeitlichen, räumlichen und/oder funktionellen Zusammenhang der Besucherausweis gedruckt wird und erst zu einem späteren Zeitpunkt weitere Daten des Besuchers in die Datenbank (100) eingegeben werden.

33. Verfahren nach einem der Ansprüche 1 bis 22, wobei das gedruckte Dokument (37) zur Überwachung eines Materialflusses mittels eines computergesteuerten Netzwerks verwendet wird.

34. Gerätesystem zur Produktion eines gedruckten Dokuments (37) mit einer eindeutigen Kennung, umfassend:
- einen Aufzeichnungsträger (5, 27),
- einen elektronischen Datenträger (44) in Form eines Transponders mit einem individuellen Erkennungsmerkmal, der berührungslos elektronisch lesbar ist,
- ein Druckgerät (4, 89, 117), mit dem der Aufzeichnungsträger (5, 27) mit Informationen bedruckt wird,
**dadurch gekennzeichnet,**
- **dass** der Transponder (44) in einem elektronischen Speicherbereich eine nicht veränderbare Kennung aufweist,
- **dass** das Gerätesystem eine Lesestation (88, 131) aufweist und so eingerichtet ist, dass die Lesestation (88, 131) im Zuge des Dokumentenproduktionsvorgangs die Kennung des Datenträgers (44) berührungslos liest,
- **dass** das Gerätesystem einen Steuerungscomputer (3a) aufweist, der im Zuge des Dokumentenproduktionsvorgangs Daten des gedruckten Dokuments und der Kennung des Datenträgers (44) in einer Datei verknüpft,
wobei das Lesen der Kennung und die Verknüpfung der Daten in unmittelbarem zeitlichen, räumlichen und/oder funktionellen Zusammenhang des Druckvorgangs erfolgen.

35. Gerätesystem nach Anspruch 34, umfassend einen Computer (64, 65).

36. Computerprogramm, das beim Laden und Ablaufen auf einem Computer einen Verfahrensablauf nach einem der Ansprüche 1 bis 33 bewirkt.

## Claims

1. A method for the production of a printed document (37) with a unique identifier,
wherein a recording medium (5, 27) with an electronic data carrier (44) in the form of a transponder having an individual detection feature is used which can be electronically read without contact,
wherein the recording medium (5, 27) is printed with information, **characterized in**
- **that** the transponder (44) has an unchangeable identifier in an electronic storage region,
- **that** in the course of the document production event the identifier of the data carrier (44) is read without contact in a read station (88, 131),
- **that** in the course of the document production event data of the printed document and of the identifier of the data carrier (44) are linked in a file, and
- **that** the reading of the identifier and the linking of the data take place in the immediate temporal, spatial and/or functional context of the print event.

2. The method according to claim 1, wherein the file is used to check the authenticity of the document (37) in a document processing event downstream of the document production event such that its content is compared with read data from the document (37).

3. The method according to claim 1 or 2, wherein the data of the printed document and of the data carrier (44) are linked with data of a user program in the file.

4. The method according to one of the preceding claims, wherein the transponder (44) is already applied on the recording medium (5, 27) before the print event.

5. The method according to one of the claims 1 to 4, wherein an identifier number (39) printed in plain text, an in particular two-dimensional optically readable barcode (40, 42a, 42b, 43a, 43b, 43c) and/or information in a magnetisable layer (24) is additionally applied on the recording medium (5, 27).

6. The method according to claim 5, wherein the identifier number printed in plain text is identical to the identifier number stored in the transponder (44), to an identifier number stored in the optical barcode (40, 42a, 42b, 43a, 43b, 43c) and/or to an identifier number stored in the magnetic layer (24), or another identifier number is associated with the identifier number of the transponder.

7. The method according to one of the preceding claims, wherein unique identifiers of a person, in particular a fingerprint, a genetic fingerprint and/or specifications about the iris of the person are stored on the document (37) and this data can likewise be stored in the file in the course of the document production process.

8. The method according to one of the preceding claims, wherein the data on the document (37) are compared with the data of the file created in the course of the document production process using the printed document (37) for identification of a person and/or good.

9. The method according to one of the preceding claims, wherein the data are stored encrypted on the data carrier (44).

10. The method according to one of the preceding claims, wherein the print result, the identifier of the data carrier (44) and/or the electronic write result are checked and, in the case of a faulty printing, a faulty identifier and/or an erroneous write result, the erroneous document (37) is automatically separated out and the repeated generation of the document is initiated.

11. The method according to one of the preceding claims, where the print event takes place with at least one electrographic print device (4) and the electronic writing in the data carrier (44) and/or the contact-free reading of the identifier takes place after the recording medium (5, 27) has left the print device (4).

12. The method according to one of the preceding claims, wherein at a monitoring point that comprises at least one write station (6) and at which the document (37) is detected, a piece of information from which it can be detected that the document (37) was at the monitoring point is stored in the data carrier (44).

13. The method according to claim 12, wherein at the monitoring point additional data is detected from the document (37) and it is stored in a central tracking databank that the document was at the monitoring point.

14. The method according to one of the preceding claims, wherein the immediate context is established via temporal and/or spatial forced coupling.

15. The method according to one of the preceding claims, wherein the immediate context is established via a functional forced coupling.

16. The method according to claim 15, wherein the forced coupling takes place via a mechanical and/or electronic device.

17. The method according to claim 15 or 16, wherein the forced coupling is produced via a feed device that feeds the recording medium (5, 27) to the printing station (89, 117) and to the reading station (88, 131).

18. The method according to one of the claims 14 to 17, wherein the data carrier (44) is automatically read out in a reading station and is automatically transported between the reading station and the printing station.

19. The method according to one of the claims 14 to 18, wherein a subsequent document is only printed in the printing station after the association has taken place between the data of the data carrier (44) and the printed data.

20. The method according to one of the claims 14 to 19, wherein the result of the data reading from the data carrier (44) is checked and, given the presence of an error, the same document is printed again with a different data carrier (14).

21. The method according to one of the claims 14 to 20, wherein a tracking of people and/or goods takes place with the error-free printed document.

22. The method according to one of the claims 14 to 21, wherein a waybill or a delivery bill or a shipping label is printed as a document.

23. The method according to one of the claims 14 to 21, wherein an identification card is printed as a document.

24. The method according to one of the preceding claims, wherein as an individual detection feature biometric data are stored on the transponder (44) or in a transponder-guided databank.

25. The method according to one of the preceding claims, wherein the printed document (37) is used as a visitor identification for visitor authentication of an event by means of a computer-controlled network (76).

26. The method according to claim 25, wherein the printed document (37) is personified as an event ticket, is first made up without validity and is only made valid in a later legitimizing step in that the file associated with the entrance ticket is changed such that it is set from "invalid" to "valid".

27. The method according to claim 25, wherein the printed document (37) is personified as an entrance ticket and is rendered invalid in a later step in that the file associated to the entrance ticket is changed such that it is set from "valid" to invalid" when the entrance ticket has been lost or has been stolen.

28. The method according to claim 25, wherein the printed document (37) is used as a visitor identification card in a monitoring unit (82) for visitor specific display of information and/or for association of objects.

29. The method according to claim 28, wherein a computer with a wireless connection to the network (76) is used in the monitoring unit (82).

30. The method according to claim 28 or 29, wherein for association of an object, information corresponding to the object is stored in a databank (100) connected to the network (76) and/or on the data carrier (44).

31. The method according to claim 30, wherein information about the monitoring point at which the object has been detected is additionally stored.

32. The method according to one of the claims 25 to 31, wherein a document that contains data of a visitor is scanned with an image scanner (87) in the reception unit (80), a first group of the visitor data is stored in a databank (100) connected to the network (76) and connected with the electronic detection feature of a recording medium, and the visitor identification card is printed in immediate temporal, spatial and/or functional context and further data of the visitor are only input in the databank (100) at a later point in time.

33. The method according to one of the claims 1 to 22, wherein the printed document (37) is used for monitoring a material flow by means of a computer-controlled network.

34. A device system for the production of a printed document (37) with a unique identifier, comprising:
- a recording medium (5, 27),
- an electronic data carrier (44) in the form of a transponder with an individual detection feature, which can be electronically read without contact,
- a printing device (4, 89, 117) with which the recording medium (5, 27) is printed with information,
**characterized in**
- **that** the transponder (44) comprises an unchangeable identifier in an electronic storage region,
- **that** the device system has a read station (88, 131) and is set up such that the read station (88, 131) reads the identifier of the data carrier (44) without contact in the course of the document production event,
- **that** the device system has a control computer (3a) which links data of the printed document and of the identifier of the data carrier (44) in a file in the course of the document production event,
wherein the reading of the identifier and the linking of the data take place in immediate temporal, spatial and/or functional context of the print event.

35. The device system according to claim 34, comprising a computer (64, 65).

36. A computer program that effects a method sequence according to one of the claims 1 to 33 upon loading and running on a computer.

## Revendications

1. Procédé de production d'un document (37) imprimé avec une identification univoque,
dans lequel est utilisé un support d'enregistrement (5, 27) avec un support de données (44) électronique sous la forme d'un transpondeur avec un attribut d'identification individuel qui peut être lu électroniquement sans contact,
et dans lequel des informations sont imprimées sur le support d'enregistrement (5, 27),
**caractérisé en ce que** :
- le transpondeur (44) comporte une identification non modifiable dans une zone de mémoire électronique,
- au cours du processus de production du document, l'identification du support de données (44) est lue sans contact dans un poste de lecture (88, 131),
- au cours du processus de production du document, des données du document imprimé et l'identification du support de données (44) sont combinées dans un fichier, et
- la lecture de l'identification et la combinaison des données sont effectuées en relation directe temporelle, spatiale et/ou fonctionnelle avec le processus d'impression.

2. Procédé selon la revendication 1, dans lequel le fichier pour vérifier l'authenticité du document (37) est utilisé dans un processus de traitement du document, consécutif au processus de production du document, de telle sorte que son contenu est comparé à des données lues du document (37).

3. Procédé selon la revendication 1 ou 2, dans lequel les données du document imprimé et du support de données (44) sont combinées dans le fichier à des données d'un programme utilisateur.

4. Procédé selon l'une quelconque des revendications précédentes, dans lequel le transpondeur (44) est déjà appliqué sur le support d'enregistrement (5, 27) avant le processus d'impression.

5. Procédé selon l'une quelconque des revendications 1 à 4, dans lequel un numéro d'identification (39) imprimé en clair, un code à barres (40, 42a, 42b, 43a, 43b, 43c) lisible par voie optique en particulier sous forme bidimensionnelle, et/ou une information dans une couche (24) magnétisable est appliqué sur le support d'enregistrement (5, 27).

6. Procédé selon la revendication 5, dans lequel le numéro d'identification, imprimé en clair, est identique au numéro d'identification stocké dans le transpondeur (44), à un numéro d'identification stocké dans le code à barres (40, 42a, 42b, 43a, 43b, 43c) optique et/ou à un numéro d'identification stocké dans la couche (24) magnétique, ou un autre numéro d'identification est associé au numéro d'identification du transpondeur.

7. Procédé selon l'une quelconque des revendications précédentes, dans lequel des identifications univoques d'une personne, en particulier une empreinte digitale, une empreinte digitale génétique et/ou des informations sur l'iris de la personne, sont stockées sur le document (37) et, au cours du processus de production du document, ces données sont également stockées dans le fichier.

8. Procédé selon l'une quelconque des revendications précédentes, dans lequel, pour identifier une personne et/ou une marchandise à l'appui du document (37) imprimé, les données sur le document (37) sont comparées aux données du fichier créé au cours du processus de production du document.

9. Procédé selon l'une quelconque des revendications précédentes, dans lequel les données sur le support de données (44) sont stockées sous forme codée.

10. Procédé selon l'une quelconque des revendications précédentes, dans lequel le résultat d'impression, l'identification du support de données (44) et/ou le résultat d'écriture électronique sont contrôlés et, dans le cas d'une erreur d'impression, d'une identification erronée et/ou d'un résultat d'écriture erroné, le document (37) défectueux est automatiquement rejeté et la nouvelle production du document est ordonnée.

11. Procédé selon l'une quelconque des revendications précédentes, dans lequel le processus d'impression est effectué avec au moins un dispositif d'impression (4) électrographique, et l'écriture électronique dans le support de données (44) et/ou la lecture sans contact de l'identification sont effectuées après que le support d'enregistrement (5, 27) a quitté le dispositif d'impression (4).

12. Procédé selon l'une quelconque des revendications précédentes, dans lequel, au niveau d'un point de contrôle, qui comporte au moins un poste d'écriture (6) et au niveau duquel le document (37) est enregistré, une information, permettant de détecter que le document (37) est passé par le point de contrôle, est stockée dans le support de données (44).

13. Procédé selon la revendication 12, dans lequel des données supplémentaires du document (37) sont enregistrées au niveau du point de contrôle, et, dans une base de données de suivi centrale, il est enregistré que le document était au point de contrôle.

14. Procédé selon l'une quelconque des revendications précédentes, dans lequel la relation directe est réalisée par un couplage forcé dans le temps et/ou dans l'espace.

15. Procédé selon l'une quelconque des revendications précédentes, dans lequel la relation directe est réalisée par un couplage forcé fonctionnel.

16. Procédé selon la revendication 15, dans lequel le couplage forcé est effectué par un dispositif mécanique et/ou électronique.

17. Procédé selon la revendication 15 ou 16, dans lequel le couplage forcé est réalisé par un dispositif d'acheminement qui achemine le support d'enregistrement (5, 27) vers le poste d'impression (89, 117) et vers le poste de lecture (88, 131).

18. Procédé selon l'une quelconque des revendications 14 à 17, dans lequel le support de données (44) est lu automatiquement dans un poste de lecture, et est transporté automatiquement entre le poste de lecture et le poste d'impression.

19. Procédé selon l'une quelconque des revendications 14 à 18, dans lequel un document suivant est imprimé dans le poste d'impression uniquement après que l'association entre les données du support de données (44) et les données imprimées a été effectuée.

20. Procédé selon l'une quelconque des revendications 14 à 19, dans lequel le résultat de la lecture des données du support de données (44) est contrôlé, et, en présence d'une erreur, le même document est à nouveau imprimé avec un autre support de données (44).

21. Procédé selon l'une quelconque des revendications 14 à 20, dans lequel un suivi des personnes et/ou des marchandises est effectué avec le document imprimé sans erreur.

22. Procédé selon l'une quelconque des revendications 14 à 21, dans lequel le document imprimé est un document de transport ou un bon de livraison, ou un label de commercialisation.

23. Procédé selon l'une quelconque des revendications 14 à 21, dans lequel le document imprimé est une carte d'identité.

24. Procédé selon l'une quelconque des revendications précédentes, dans lequel des données biométriques, sous la forme d'un attribut d'identification individuel, sont stockées sur le transpondeur (44) ou dans une base de données gérée dans le transpondeur.

25. Procédé selon l'une quelconque des revendications précédentes, dans lequel le document imprimé (37) est utilisé comme carte de visiteur, servant à identifier un visiteur dans une manifestation au moyen d'un réseau (76) commandé par ordinateur.

26. Procédé selon la revendication 25, dans lequel le document (37) imprimé est personnifié sous la forme d'un billet d'entrée, est établi d'abord sans validité et, seulement au cours d'une étape de légitimation ultérieure, est rendu valide, du fait que le fichier associé au billet d'entrée est modifié de telle sorte qu'il est transposé de « non valide » en « valide ».

27. Procédé selon la revendication 25, dans lequel le document (37) imprimé est personnifié sous la forme d'un billet d'entrée et, au cours d'une étape ultérieure, est rendu non valide, du fait que le fichier associé au billet d'entrée est modifié de telle sorte qu'il est transposé de « valide » en « non valide », lorsque le billet d'entrée a été perdu ou volé.

28. Procédé selon la revendication 25, dans lequel le document (37) imprimé constituant une carte de visiteur est utilisé dans une unité de contrôle (82) pour l'affichage d'informations spécifiques au visiteur et/ou pour l'association d'objets.

29. Procédé selon la revendication 28, dans lequel un ordinateur avec une liaison sans câble avec le réseau (76) est utilisé dans l'unité de contrôle (82).

30. Procédé selon la revendication 28 ou 29, dans lequel, pour l'association d'un objet, une information correspondant à l'objet est stockée dans une base de données (100) raccordée au réseau (76) et/ou sur le support de données (44).

31. Procédé selon la revendication 30, dans lequel est mémorisée, en plus, une information sur le point de contrôle au niveau duquel l'objet a été enregistré.

32. Procédé selon l'une quelconque des revendications 25 à 31, dans lequel un modèle, qui contient les données d'un visiteur, est balayé par un scanner (87) dans l'unité de réception (80), un premier groupe des données visiteur est stocké dans une base de données (100) raccordée au réseau (76), et est lié à l'attribut d'identification électronique d'un support d'enregistrement et est imprimé en relation directe temporelle, spatiale et/ou fonctionnelle avec la carte de visiteur, et, seulement à un moment ultérieur, d'autres données du visiteur sont entrées dans la base de données (100).

33. Procédé selon l'une quelconque des revendications 1 à 22, dans lequel le document (37) imprimé est utilisé pour surveiller un flux de matière au moyen d'un réseau commandé par ordinateur.

34. Système d'appareils pour la production d'un document (37) imprimé avec une identification univoque, comportant :
- un support d'enregistrement (5, 27),
- un support de données (44) électronique sous la forme d'un transpondeur, avec un attribut d'identification individuel qui peut être lu électroniquement sans contact,
- un dispositif d'impression (4, 89, 117), dans lequel des informations sont imprimées sur le support d'enregistrement (5, 27),
**Caractérisé en ce que** :
- le transpondeur (44) comporte une identification non modifiable dans une zone de mémoire électronique,
- le système d'appareils comporte un poste de lecture (88, 131) et est conçu de telle sorte que, au cours du processus de production du document, le poste de lecture (88, 131) lit sans contact l'identification du support de données (44),
- le système d'appareils comporte un ordinateur de commande (3a), au moyen duquel des données du document imprimé et l'identification du support de données (44) sont combinées dans un fichier au cours du processus de production du document,
- la lecture de l'identification et la combinaison des données étant effectuées en relation directe temporelle, spatiale et/ou fonctionnelle avec le processus d'impression.

35. Système d'appareils selon la revendication 34, comportant un ordinateur (64, 65).

36. Programme informatique qui, lors du chargement et du déroulement sur un ordinateur, induit le déroulement d'un procédé selon l'une quelconque des revendications 1 à 33.
